# EUROPÄISCHE PATENTSCHRIFT

(11) **EP 3 066 931 B1**
(45) Veröffentlichungstag und Bekanntmachung des Hinweises auf die Patenterteilung: **05.09.2018**
(21) Anmeldenummer: 16160022.6
(22) Anmeldetag: 11.03.2016
(51) Int. Cl.: A22B 3/08, A22B 3/06

(54) **SCHLACHTVORRICHTUNG**
SLAUGHTERING DEVICE
DISPOSITIF D'ABATTAGE

(30) Priorität: 13.03.2015 DE 202015101312 U
(43) Veröffentlichungstag der Anmeldung: 14.09.2016
(73) Patentinhaber: Hartmann GbR, 87767 Niederrieden (DE)
(72) Erfinder: Hartmann, Florian, 87767 Niederrieden (DE); Hartmann, Martin, 87767 Niederrieden (DE)
(74) Vertreter: Pfister & Pfister Patent- und Rechtsanwälte

(56) Entgegenhaltungen:
- EP-B1- 1 935 248
- GB-A- 2 302 639
- US-A- 3 828 397
- US-A1- 2003 065 414

## Beschreibung

Die Erfindung betrifft eine Schlachtvorrichtung für Kleintiere.

Zur kosteneffizienten Schlachtung großer Mengen an Geflügel oder anderer Kleintiere sind automatische Schlachtanlagen bekannt. Dabei werden die Tiere in eine Art Förderband eingehängt, welches sich dann kontinuierlich durch verschiedene Stationen der Maschine bewegt, an denen unterschiedliche Schritte des Schlacht- und Verarbeitungsprozesses durchgeführt werden. Derartige Anlagen schaffen einen großen Durchsatz an Tieren pro Zeit und weisen einen hohen Automatisierungsgrad auf. Nachteilig an solchen Anlagen für kleine bis mittelgroße Betriebe sind der hohe Platzbedarf sowie die hohen Investitionskosten für derartige Anlagen. Weiterhin sind solche Schlachtanlagen kaum beweglich und können daher nicht flexibel an verschiedenen Standorten eingesetzt werden.

Die Schlachtung von Kleintieren, wie Geflügel oder Hasen in Kleinbetrieben erfolgt bisweilen noch in Handarbeit, wobei einfache Handvorrichtungen als Hilfsmittel für das Töten zum Einsatz kommen. Nachteilig an diesem Schlachten von Hand ist der hohe Personalaufwand, der wiederum hohe Kosten erzeugt, sowie die Gefahr, dass die von Hand durchgeführten Schlachtungen nicht immer den gesetzlichen Vorschriften zum Umgang mit Lebewesen entsprechen und die Tiere beim Schlachten unnötig leiden müssen.

In EP 1 935 248 B1 ist eine Vorrichtung und ein Verfahren zur Geflügelbetäubung offenbart. Die elektrische Kontaktierung der Tiere zur Durchführung einer Betäubung mittels Stromstoß wird dadurch verbessert, dass eine spezielle Elektrode zur Kontaktierung des gut leitenden Afterbereiches der Tiere vorgesehen wird. Die offenbarte Vorrichtung ist allerdings nur durch größeren Aufwand an unterschiedliche Tiere oder Tiere unterschiedlicher Größe anpassbar.

GB 2 302 639 A offenbart eine Vorrichtung zur Betäubung von Geflügel mittels eines Stromstoßes. Dazu weist die Vorrichtung ein großes halbkreisförmiges Becken mit leitender Flüssigkeit auf, durch das die zu betäubenden Tiere gezogen werden. Nachteilig an der gezeigten Vorrichtung ist der große Platzbedarf.

Auch US 3,828,397 A offenbart eine Betäubungsvorrichtung für Geflügel, bei der elektrischer Strom zur Betäubung verwendet wird. Das zu betäubende Geflügel wird entlang eines längeren, stufen förmigen Beckens durch eine leitende Flüssigkeit gezogen. Auch diese Vorrichtung benötigt sehr viel Platz.

Die Aufgabe der vorliegenden Erfindung ist es daher, Lösungen vorzuschlagen, die besser geeignet sind, die Anforderungen in kleinen und mittelständischen Betrieben an die Schlachtung von Kleintieren zu erfüllen, als es der Stand der Technik tut.

Diese Aufgabe wird gelöst durch eine Schlachtvorrichtung nach Anspruch 1 für Kleintiere mit mehreren unterschiedlichen Stationen, wobei die Schlachtvorrichtung einen unbeweglichen Träger und ein drehbar gelagertes, karussellartiges Gestell aufweist und mehrere Aufhängeelemente zum Aufhängen der zu schlachtenden Tiere am Gestell aufweist, wobei ein direktes Aufhängen der Tiere am Gestell an einer Einhängestation vorgesehen ist und die Tiere durch eine Drehbewegung des Gestells relativ zum unbeweglichen Teil der Schlachtvorrichtung von Station zu Station gelangen und eine Betäubungsstation vorgesehen ist, mit einem Becken, welches in einer Betäubungsstellung in vertikaler Richtung verstellbar ist und welches zusammen mit einem Aufhängeelement und einer Stromquelle einen Stromkreis zum Betäuben des zu schlachtenden Tieres bildet, wobei der Strom in diesem Betäubungsstromkreis bei Erreichen einer geeigneten vertikalen Position des Beckens, bei welcher der Kopf des zu schlachtenden Tieres in das Wasser im Becken taucht, fließt, wobei eine Führung für die vertikale, nicht mit anderen Bewegungen gekoppelte Bewegung des Beckens vorgesehen ist und das Becken vor dem Betäubungsvorgang in vertikaler Richtung bewegbar ist, so lange bis der Kopf eines aufgehängten Tieres in die Flüssigkeit taucht.

Eine erfindungsgemäße Schlachtvorrichtung weist einen unbeweglichen Träger und ein drehbar gelagertes karussellartiges Gestell auf. Die zu schlachtenden Tiere werden mit den Füßen an Aufhängeelementen aufgehängt, die mit dem drehbaren Teil der Schlachtvorrichtung verbunden sind. Eine Bewegung der aufgehängten Tiere von einer Station der Vorrichtung zur nächsten erfolgt über eine karussellartige Drehbewegung des Gestells relativ zu dem unbeweglichen Teil der Schlachtvorrichtung. Bei einer erfindungsgemäßen Schlachtvorrichtung werden die Tiere direkt am Gestell aufgehängt, d.h. es existiert kein zusätzliches Transportelement für die Tiere, wie eine Transportkette oder ein Förderband, wie es bei herkömmlichen, großen Schlachtanlagen eingesetzt wird. Ein wesentlicher Vorteil dieses direkten Aufhängens der Tiere liegt darin, dass der Aufbau und Funktion der Vorrichtung deutlich vereinfacht wird. Sämtliche Mechanismen zur Bewegung und Führung eines separaten Transportelementes entfallen durch die erfindungsgemäße Ausgestaltung. Die Schlachtvorrichtung weist weiterhin eine Betäubungsstation auf, an der das zu schlachtende Tier vor der Tötung betäubt wird. Die Betäubung erfolgt dabei durch einen Stromschlag. Der für diesen Stromschlag benötigte Stromkreis wird auf der einen Seite vom Gestell der Schlachtvorrichtung gebildet, welches den Strom von einer Stromquelle über die Aufhängeeelemente auf das daran an den Füßen aufgehängte Tier überträgt. Der Strom fließt dann durch den Körper des zu betäubenden Tieres und wird über den Kopf des Tieres wieder abgeleitet. Selbstverständlich ist es auch möglich, dass bei einer erfindungsgemäßen Schlachtvorrichtung der Fluss von Gleichstrom zur Betäubung in die umgekehrte Richtung erfolgt d.h. vom Kopf des zu betäubenden Tieres zu dessen Füßen. Darüber hinaus kann die Betäubung auch durch Wechselstrom erfolgen. Die Schlachtvorrichtung weist in der Betäubungsstation ein in vertikaler Richtung verstellbares, elektrisch nicht leitendes Becken auf, welches mit einer elektrisch leitenden Flüssigkeit, beispielsweise Wasser, gefüllt wird. Vor dem Betäubungsvorgang wird das Becken dann in vertikaler Richtung bewegt, so lange bis der Kopf des Tieres in die Flüssigkeit taucht. Die Flüssigkeit bildet dann einen Weg für den Fluss des Betäubungsstroms vom Kopf des Tieres zurück zur Stromquelle, wodurch der Betäubungsstromkreis geschlossen ist. Vorteilhaft an einem in vertikaler Richtung verstellbaren Becken ist, dass die vertikale Position des Beckens stets optimal an die Körpergröße des zu schlachtenden Tieres angepasst werden kann, was einen sicheren und den Vorschriften entsprechenden Betäubungsvorgang ermöglicht. Bei herkömmlichen Großanlagen ist eine derartige, individuelle Anpassung der vertikalen Beckenposition bzw. Eintauchposition des Kopfes nicht möglich. Daher werden die Tiere vor der Schlachtung der Größe nach vorsortiert, was einen erheblichen Aufwand bedeutet, der bei einer erfindungsgemäßen Schlachtvorrichtung nicht anfällt und somit eingespart wird. Ein weiterer Vorteil des Merkmals einer erfindungsgemäßen Schlachtvorrichtung, dass die zu schlachtenden Tiere direkt und ohne weitere Mechanismen am Gestell der Vorrichtung eingehängt werden, in Kombination mit dem Merkmal des individuell in seiner vertikalen Lage verstellbaren Beckens, ist der deutlich vereinfachte mechanische Aufbau der gesamten Vorrichtung. Bei herkömmlichen Schlachtvorrichtungen werden die Tiere zumeist an einer Art Transportkette aufgehängt, welche dann entlang der Schlachtvorrichtung bewegt wird. Die Durchführung der Betäubungsbewegung erfolgt beim Stand der Technik meist durch eine mechanische Kulissenführung, durch die die zu betäubenden Tiere in ein Wasserbecken eingetaucht und wieder herausgehoben werden. Die Realisierung einer derartigen mechanischen Kulissenführung, bei der eine horizontale Bewegung einer Transportkette mit einer Vertikalbewegung zwangsgeführt verknüpft werden muss, ist sehr aufwändig und fehleranfällig, ist aber wegen der Anforderung an eine konstante und kontinuierliche Weiterbewegung der Transportkette mit den Tieren erforderlich. Eine erfindungsgemäße Schlachtvorrichtung weist keine solche fehleranfällige Kulissenführung auf. Es ist lediglich eine Führung für die vertikale, nicht mit anderen Bewegungen gekoppelte Bewegung des Beckens erforderlich, die sich technisch sehr einfach umsetzen lässt.

Bei einer bevorzugten Ausgestaltung des Vorschlags ist vorgesehen, dass eine manuelle Auslösevorrichtung zum Schließen des Betäubungsstromkreises vorgesehen ist. In dieser Ausführungsform ist eine Auslösevorrichtung, wie beispielsweise ein Schalter, vorgesehen, mit dem der Bediener den Betäubungsvorgang manuell auslöst. In einer möglichen Ausführungsform ist die manuelle Auslösevorrichtung so gestaltet, dass sie durch das manuelle Anheben des Beckens in vertikaler Richtung auslöst. Der Bediener aktiviert somit die Auslösevorrichtung, indem er das Becken über eine bestimmte vertikale Position hinaus anhebt. Die Stromquelle ist ab diesem Zeitpunkt einsatzbereit den Betäubungsstrom zu liefern, die Flüssigkeit im Becken steht bereits unter Strom. Sobald beim weiteren Anheben des Beckens in vertikaler Richtung der Kopf des Tieres in die Flüssigkeit eintaucht, fließt dann der Betäubungsstrom. Vorteilhaft an dieser Ausführungsform ist, dass der Betäubungsvorgangs mit dem Eintauchen des Kopfes des Tieres sofort zu fließen beginnt und gleichzeitig eine manuelle Auslösevorrichtung vorgesehen ist, die ungewolltes Auslösen der elektrischen Betäubung verhindert. Mit dem Auslösen des Betäubungsvorganges über das Eintauchen des Kopfes wird sichergestellt, dass das Tier sofort betäubt wird und vor der Betäubung keine Atemnot in der Flüssigkeit erleiden muss. Eine weitere Möglichkeit für die Realisierung einer manuellen Auslösevorrichtung ist unabhängig von der vertikalen Position des Beckens auslösbar. Vor Beginn des Betäubungsvorgangs muss hier allerdings sichergestellt sein, dass sich das Becken in einer geeigneten vertikalen Position befindet, so dass der Kopf des zu betäubenden Tieres in die Flüssigkeit im Becken eingetaucht ist. Da die zu betäubenden Tiere meist unterschiedliche Körpergrößen haben, muss die vertikale Position des Beckens individuell an die Körpergröße jedes Tier angepasst werden. Diese Anpassung der vertikalen Position des Beckens erfolgt in dieser Ausführungsform manuell durch den Bediener der Anlage, der sich bei der Positionierung des Beckens optisch von dessen richtiger Position überzeugt. Der Einstellvorgang der vertikalen Position des Beckens stellt somit eine manuelle Handlung dar, die Voraussetzung für die Einleitung des Betäubungsvorgangs ist. Ist der Bediener der Auffassung, dass die richtige vertikale Position des Beckens für den Betäubungsvorgang erreicht ist, betätigt er die vorgesehene manuelle Auslösevorrichtung für den Betäubungsvorgangs. Eine solche manuelle Auslösevorrichtung kann beispielsweise ein Taster oder Schalter sein, die mit der Hand oder mit den Fingern bedient wird. Weiterhin sind auch fußbetätigte Schalter als Auslösevorrichtung oder andere manuell bedienbare Auslösevorrichtungen denkbar.

In einer vorteilhaften Ausgestaltung ist vorgesehen, dass eine automatische Auslösevorrichtung vorgesehen ist, die das Becken in eine geeignete vertikale Position bewegt und den Betäubungsstromkreis schließt. Alternativ zur zuvor beschriebenen Ausführungsform ist der Betäubungsvorgang hier automatisiert oder zumindest teilautomatisiert. Es ist eine automatische Auslösevorrichtung vorgesehen, die zunächst das Becken in eine geeignete vertikale Position bewegt, so dass der Kopf des zu betäubenden Tieres in die Flüssigkeit im Becken eintaucht. Die automatische Auslösevorrichtung steuert dabei einen Antrieb, der vorgesehen ist um das Becken in vertikaler Richtung zu bewegen. Das Erreichen einer geeigneten vertikalen Position des Beckens kann beispielsweise über Sensoren bestimmt werden, die die Lage des Kopfes des zu betäubenden Tieres bestimmen. Eine weitere Möglichkeit für das Erkennen der richtigen vertikalen Position des Beckens ist eine elektrische Überwachung die bestimmt, ob der Betäubungsstromkreis geschlossen ist. Taucht der Kopf des zu betäubenden Tiers in die Flüssigkeit im Becken ein, wird der Betäubungsstromkreis geschlossen, was elektrisch beispielsweise über eine Widerstandsmessung erkannt werden kann. Wird von der automatischen Auslösevorrichtung ermittelt, dass sich das Becken nun in der richtigen vertikalen Position befindet, wird automatisch der Betäubungsvorgang ausgelöst. Es ist alternativ auch möglich, dass während der Aufwärtsbewegung des Beckens der Betäubungsstromkreis bereits aktiviert ist und der Betäubungsstrom ab dem Moment fließt, in dem der Kopf des Tieres in die Flüssigkeit eintaucht. Die richtige Position des Beckens kann in dieser Ausführungsform erkannt werden, sobald ein Fluss des Betäubungsstroms gemessen wird. Beim Beginn des Fließens des Betäubungsstromes wird die automatische Aufwärtsbewegung des Beckens dann angehalten. In dieser Ausführungsform hat der Bediener wenig Einfluss auf den Betäubungsvorgang, so dass keine Fehler bei der Durchführung der Betäubung auftreten können und der Betäubungsvorgang immer in gleicher Weise und reproduzierbar durchgeführt wird.

Geschickter Weise ist vorgesehen, dass sich das Gestell während der Betäubung des zu schlachtenden Tieres in konstanter Position gegenüber dem Träger in Ruhe befindet. Beim Betäubungsvorgang wird das Becken in vertikaler Richtung nach oben bewegt, bis der Kopf des zu betäubenden Tieres in die Flüssigkeit taucht. Anschließend findet der eigentliche Betäubungsvorgang durch Stromfluss statt. Während Anhebens des Beckens und des Betäubungsvorgangs verbleibt das Gestell in konstanter Position gegenüber dem Träger. Erst nach Abschluss des Betäubungsvorgangs wird das Gestell manuell weiter gedreht, so dass das betäubte Tier aus der Betäubungsstation in die nächste Station der Schlachtvorrichtung transportiert wird. Die Schlachtvorrichtung arbeitet somit diskontinuierlich, wobei Verweilzeiten des zu betäubenden oder schlachtenden Tieres in den einzelnen Stationen auftreten und sich das Gestell während dieser Verweilzeiten nicht bewegt. Diese, auf einen diskontinuierlichen Schlachtprozess ausgelegte Ausführungsform einer Schlachtvorrichtung bietet den wesentlichen Vorteil, dass der gesamte Schlachtvorgang optimal auf einen tier- und artgerechten Betäubungsvorgang abgestimmt ist. Der Bediener kann dabei den Betäubungsvorgang genau überwachen. Ergeben sich Probleme beim Betäubungsvorgangs richtet sich der Weitertransport der Tiere in der Schlachtvorrichtung nach dem kritischen Betäubungsprozess d.h. die Schlachtvorrichtung bewegt sich nicht automatisch weiter, obwohl das Tier möglicherweise nicht richtig betäubt wurde. Dies stellt einen Vorteil gegenüber herkömmlichen Schlachtvorrichtungen dar, bei denen oft kontinuierlich ablaufende Prozesse beim Schlachten eingesetzt werden. Die Relativbewegung von zu betäubenden Tieren zu einem Becken mit leitender Flüssigkeit erfolgt bei herkömmlichen Anlagen oftmals gesteuert durch eine Kulissenführung. Eine derartige zwangsgeführte mechanische Bewegung beim Betäubungsvorgang ist kaum zu unterbrechen oder zu verändern, falls beim Betäubungsvorgang Probleme auftreten sollten. Bei einer Schlachtvorrichtung nach der beschriebenen Ausführungsform kann der Bedienter dagegen Problemen einfach entgegenwirken, indem er beispielsweise den Schlachtprozess anhält, den Betäubungsvorgang wiederholt oder auch die gesamte Vorrichtung zurückgedreht um ein Tier möglicherweise neu an der Vorrichtung einzuhängen oder es auch wieder aus der Vorrichtung ohne die Durchführung der Schlachtung zu entnehmen. Bezüglich eines vorschriftsmäßigen, tiergerechten Betäubungsvorgangs bietet eine Schlachtvorrichtung nach der beschriebenen Ausführungsform somit wesentliche Vorteile gegenüber dem Stand der Technik.

Des Weiteren ist vorgesehen, dass die Stromquelle nach dem Schließen des Betäubungsstromkreises den Betäubungsvorgang automatisch durchführt, wobei die Stromquelle auf vorher eingestellte Werte für Stromstärke und Betäubungszeit zurückgreift. In dieser Ausführungsform der Erfindung regelt die Stromquelle die Stellgrößen Stromstärke, Spannung und Zeit des Stromflusses für den Betäubungsvorgang automatisch. Je nach Körpergröße und Gewicht des zu betäubenden Tieres wird für den Betäubungsvorgang eine unterschiedliche elektrische Leistung bzw. Energiemenge benötigt. Die Anpassung der benötigten Energiemenge an das Körpergewicht des Tieres erfolgt meist entweder über eine Anpassung der Stromstärke oder über eine Anpassung der Zeit, während der der Strom fließt. Die Steuerung bietet die Möglichkeit, dass diese Parameter vor dem Betäubungsvorgangs eingestellt oder programmiert werden können. Während des eigentlichen Betäubungsvorgangs greift die Steuerung dann auf diese voreingestellten Werte zurück und verwendet diese für die Durchführung der Betäubung. Relevant für einen artgerechten Betäubungsvorgang ist die, durch das Tier geflossene elektrische Energie- bzw. Ladungsmenge. Diese Ladungsmenge ergibt sich aus dem Produkt oder Integral von Stromstärke mit der Zeitdauer des Stromflusses. Darüber hinaus ist eine gewisse Mindeststromstärke erforderlich, um im Körper des Tieres überhaupt eine Betäubung hervorzurufen. In der Praxis kommen Unterschiede in der Leitfähigkeit der Tiere oder auch der elektrischen Verbindung durch das Eintauchen des Kopfes in die Flüssigkeit des Beckens oder das Einhängen der Füße am Gestell vor. Um diesen Unterschieden in der Leitfähigkeit zu begegnen, kann die Stromquelle so ausgeführt werden, dass sie die verwendete Spannung automatisch so regelt, dass eine eingestellte Stromstärke immer erreicht wird. Ist die Leitfähigkeit im Betäubungsstromkreis geringer, so erhöht die Stromquelle automatisch die Spannung, um die voreingestellte eingestellte Stromstärke zu erreichen. Selbstverständlich kann auch eine spannungsgeregelte Stromquelle eingesetzt werden, die die Stromstärke im Betäubungsstromkreis an eine vor eingestellte (Höchst-)Spannung anpasst.

Geschickter Weise ist vorgesehen, dass die Schlachtvorrichtung mindestens eine Anzeige aufweist, die den Status des Betäubungsvorganges anzeigt. Durch das Vorsehen von einer oder mehreren Anzeigen wird sichergestellt, dass der Bediener der Vorrichtung stets im Bilde ist, in welchem Status sich der Betäubungsvorgang befindet. Eine vorgesehene Anzeige könnte beispielsweise anzeigen, dass der Betäubungsvorgang gerade durchgeführt wird. Eine derartige Anzeige hat dann eine besondere Warnwirkung, da nur während der Durchführung des Betäubungsvorgangs eine Gefahr für den Bediener vorliegt, einen Stromschlag zu erhalten. Eine derartige Warnanzeige, die die direkte Durchführung des Betäubungsvorgangs signalisiert könnte beispielsweise durch eine rot blinkende Leuchte realisiert werden. Selbstverständlich sind aber auch andere Ausführungsformen eine Anzeige mit zur Erfindung gehörend. Es ist ebenfalls vorteilhaft, den Abschluss des Betäubungsvorgangs über eine Anzeige darzustellen. Dadurch wird der Bediener klar informiert, dass nun kein Betäubungsstrom mehr fließt und das Tier erfolgreich betäubt wurde. In ähnlicher Weise ist eine Anzeige nützlich, die die Bereitschaft der Anlage zur Durchführung eines weiteren Betäubungsvorgangs erkennen lässt. Derartige Anzeigen können optisch, akustisch, taktil oder auch in einer Kombination dieser Ausführungen beschaffen sein.

Bei einer bevorzugten Ausgestaltung des Vorschlags ist vorgesehen, dass die mindestens eine Anzeige als Signalleuchte und/oder Klartextdisplay und/oder akustische Signaleinrichtung ausgebildet ist. Die Ausführung einer oder mehrerer Anzeigen als Signalleuchte wurde bereits beschrieben. Eine weitere mögliche Ausführungsform für Anzeigen ist ein Klartextdisplay, mit dem vielfältige Informationen dargestellt werden können. So könnte beispielsweise der anliegende Betäubungsstrom oder die Betäubungszeit dargestellt werden. Darüber hinaus können Statusmeldungen wie beispielsweise "bereit" oder "Störung" über ein derartiges Display übermittelt werden. Der Betäubungsvorgang kann dabei softwaregesteuert durchlaufen werden. Es ist möglich, eine Software vorzusehen, welche verschiedene Zustände aufweist. Derartige Zustände können beispielsweise Leerlauf/betriebsbereit", "Beginn des Betäubungsvorgangs", Durchführung des Betäubungsvorgangs", "Fehler bei der Betäubung" und "Betäubung erfolgreich beendet" sein. Der Wechsel zwischen diesen Zuständen ist durch entsprechende Abfragen in der Software realisiert, wobei auch gemessene Strom- und Spannungswerte sowie Sensorsignale als Eingang in diese Abfragen verwendet werden. Zu jedem der Zustände ist geschickter Weise eine optische Anzeige an der Schlachtvorrichtung vorgesehen. Alternativ oder zusätzlich können auch akustische Signaleinrichtungen als Anzeige vorgesehen werden. Akustische Signaleinrichtungen haben den Vorteil, dass die von ihnen übermittelte Information auch dann beim Bediener ankommt, wenn dieser gerade nicht seinen Blick auf die Anzeige gerichtet hat.

Vorteilhafter Weise ist vorgesehen, dass die Stromquelle einen Datenspeicher aufweist, in dem die Parameter der Betäubungsvorgänge, zumindest bestehend aus Stromstärke, Betäubungszeit, Uhrzeit und Datum abgelegt werden und eine Datenschnittstelle, beispielsweise eine USB-Schnittstelle, eine mobile Speicherkarte, ein Flash-Speicher, ein Netzwerkanschluß oder Ähnliches vorgesehen ist um diese Daten aus dem Datenspeicher der Stromquelle auszulesen. Eine richtige und angepasste Betäubung eines jeden Tieres ist wichtig, um einen schmerzfreien Tod der Tiere zu gewährleisten. In einer Ausführungsform der Erfindung weist die Stromquelle einen Datenspeicher auf, indem die Daten zu einem jeden Betäubungsvorgangs erfasst und abgespeichert werden. Diese Datenspeicherung dient der Dokumentation der Betäubungsvorgänge und somit dem Nachweis einer fachgerechten Betäubung der zu schlachtenden Tiere. Charakteristisch für jeden Betäubungsvorgang sind zunächst Stromstärke und Betäubungszeit. Zusätzlich dazu werden Daten abgespeichert, um jeden Betäubungsvorgangs zeitlich zu erfassen was durch die Abspeicherung von Uhrzeit und Datum erfolgt. Darüber hinaus können weitere Informationen abgespeichert werden, wie beispielsweise der Name des Bedieners oder genauere Bezeichnungen und Informationen zu dem betäubten Tier wie Betriebsnummer des Halters, Standort des Halters und der durchgeführten Betäubung, Herdennummer des Tieres, sowie Alter, Einstallungsdatum und Geschlecht des Tieres. Die Generierung von Datensätzen ist dabei nicht auf die genannten Informationen beschränkt, sondern kann beliebig erweitert werden. Weiterhin ist eine Datenschnittstelle vorgesehen über die die in der Steuerung abgespeicherten Daten ausgelesen und archiviert werden können. Eine derartige Datenschnittstelle kann unterschiedlichste Ausführungsformen aufweisen wie beispielsweise als USB-, Firewire, RS232- oder Ethernet-Schnittstelle. Weiterhin kann die Datenschnittstelle auch als eine Art Laufwerk, beispielsweise für Speicherkarten oder Disketten ausgebildet sein.

Vorteilhafter Weise ist vorgesehen, dass eine Schutzwand vorgesehen ist, die zwischen der Betäubungsstation und dem Bediener angebracht ist, wobei der Betäubungsstromkreis nur geschlossen werden kann, wenn sich die Schutzwand in der vorgesehenen Position befindet. In dieser Ausführungsform stellt eine Schutzwand sicher, dass der Bediener der Schlachtvorrichtung nicht versehentlich in Berührung mit stromführenden Teilen kommt. Aus diesem Grund ist die Schutzwand zwischen der Betäubungsstation und dem Bediener angebracht. Diese Schutzwand ist so gestaltet, dass sie entfernt werden kann, um bei Wartungsarbeiten einen besseren Zugang zur Betäubungsstation zu haben. Allerdings sind elektrische Schaltelemente vorgesehen, die die Position der Schutzwand erkennen und ein Auslösen des Betäubungsvorgangs nur zulassen, wenn sich die Schutzwand in der dafür vorgesehenen Position befindet. Somit ist sichergestellt, dass die Schutzwand nicht versehentlich oder auch absichtlich entfernt wird und stets eine wirksame Sicherheitseinrichtung für den Bediener vorhanden ist. Alternativ kann die Schutzwand auch fest mit einem unbeweglichen Teil der Schlachtvorrichtung, beispielsweise dem Träger oder dem Fuß, verbunden sein. Eine solche feste, nicht lösbare Verbindung der Schutzwand mit der Schlachtvorrichtung kann beispielsweise durch eine Schweißverbindung hergestellt werden.

Des Weiteren ist günstiger Weise vorgesehen, dass radial zur Drehachse mindestens eine Trennwand angebracht ist, welche die Bereiche der einzelnen Aufhängeelemente voneinander räumlich abtrennt. In dieser Ausführungsform wird mindestens eine Trennwand an dem drehbar gelagerten Teil des Gestells angebracht. Diese mindestens eine Trennwand verläuft in vertikaler Richtung und trennt den Bereich zwischen zwei benachbarten Aufhängeelementen räumlich ab. Somit wird jedes Aufhängeelement zum nächsten abgeschirmt. Das hat den Vorteil, dass Bediener, die an unterschiedlichen Stationen der Vorrichtung arbeiten sich nicht gegenseitig sehen und nicht stören können. Besonders wichtig ist diese Abschirmung gegenüber anderen Stationen und Bedienern bei der Betäubungsstation, wo Gefahrenpotenzial durch den Stromfluss bei der Betäubung vorliegt. Darüber hinaus dienen die Trennwände zur Ruhigstellung der eingehängten Tiere, da sich die Tiere durch die Trennwände nicht gegenseitig sehen können.

Geschickter Weise ist vorgesehen, dass der Winkel zwischen zwei Trennwänden sowie die Form des von oben betrachteten Raumes zwischen zwei Trennwänden im Wesentlichen dem Winkel des sektorförmigen Beckens und der Form des von oben betrachteten Beckens entspricht, wodurch ein vertikales Anheben des Beckens nach einem Schlüssel-Schloss-Prinzip nur möglich ist, wenn sich der drehbare Teil des Gestells und damit ein Aufhängeelement in der korrekten Lage zum Becken befinden. In dieser Ausführungsform sind die Form des Beckens der Betäubungsstation und die Form, die zwei benachbarte Trennwände miteinander bilden so aufeinander abgestimmt, dass sich das karussellartige Gestell nicht weiter drehen lässt, während ein Betäubungsvorgangs durchgeführt wird. Dies stellt eine Sicherheitsmaßnahme dar, die zum einen den Bediener vor Stromschlägen schützen soll und zum anderen verhindern soll, dass ein laufender Betäubungsvorgang durch die Weiterdrehung des Gestells unterbrochen wird und das zu betäubende Tier leiden muss. Solange kein Betäubungsvorgang durchgeführt werden soll, befindet sich das Becken unterhalb der Trendwände, so dass sich das Gestell mit den daran befestigten Trennwänden weiterdrehen lässt. In Vorbereitung auf einen Betäubungsvorgang wird das Becken in vertikaler Richtung nach oben bewegt und dringt dadurch in den Raum ein, der von zwei benachbarten Trennwänden gebildet wird. Das Becken befindet sich dann zwischen den beiden benachbarten Trennwänden, so dass diese Trennwände mit dem Becken kollidieren sobald eine Drehbewegung des Gestells ausgeführt werden soll. Durch die Kollision von Trennwänden und Becken wird wirkungsvoll eine weitere Drehung verhindert, solange das Becken nicht in vertikaler Richtung wieder ganz nach unten bewegt wird. Andersherum betrachtet ist ein vertikales Anheben des Beckens nicht möglich, solange sich die Trennwände nicht in einer für den Betäubungsvorgangs geeigneten Position befinden. Steht beispielsweise eine Trennwand in die Betäubungsstation ein, kollidiert das Becken bei einer Aufwärtsbewegung mit der im Weg stehenden Trennwand, wodurch eine weitere vertikale Bewegung des Beckens nach oben verhindert wird. Erst wenn der karussellartige Teil des Gestells in der Art weitergedreht wird, dass keine Trennwand mehr in die Betäubungsstation einsteht, ist eine vertikale Aufwärtsbewegung des Beckens wieder möglich. Da in den meisten Ausführungsformen das Auslösen eines Betäubungsvorgangs nur möglich ist, wenn sich das Becken in einer vertikalen erhöhten Position befindet stellt dieses Schlüssel-Schloss-Prinzip zwischen der Form des Beckens und der Form des Raumes zwischen zwei Trennwänden gleichzeitig eine Sicherung gegen ungewolltes Auslösen des elektrischen Betäubungsvorgangs dar.

Bei einer bevorzugten Ausgestaltung des Vorschlags ist vorgesehen, dass die Kontur des Beckens, in Blickrichtung der Drehachse des Karussells gesehen, etwas kleiner ist als die aus der gleichen Richtung betrachtete Sektorkontur eines Sektors, der durch zwei benachbarte Trennwände begrenzt ist. Diese Ausgestaltungsformen bewirkt, dass sich der drehbare Teil des Gestells nicht weiter bewegen lässt, solange sich das Becken der Betäubungsstation zwischen zwei benachbarten Trennwänden befindet. Gleichermaßen lässt sich das Becken in vertikaler Richtung nur nach oben bewegen, wenn sich zwei benachbarte Trennwände in der dafür vorgesehenen Position befinden. Des Weiteren wird zur Erklärung der Zusammenhänge auf den vorhergehenden Absatz und das dort dargestellte Schlüssel-Schloss-Prinzip zwischen Becken und zwei benachbarten Trennwänden verwiesen.

Des Weiteren ist günstiger Weise vorgesehen, dass in der Betäubungsstellung zwischen dem Beckenrand des Beckens und den benachbarten Trennwänden ein Spalt besteht. In der Betäubungsstellung ist das Becken der Betäubungsstation in vertikaler Richtung nach oben bewegt. In dieser Position befindet sich das Becken dann zwischen zwei benachbarten Trennwänden. Zwischen den Trennwänden und dem Beckenrand befindet sich dann ein Spalt, der eine vertikale Bewegung des Beckens ohne Reibung an den Trennwänden erlaubt. Der Spalt ist aber relativ schmal gewählt, insbesondere geringer als 5 cm, damit in Betäubungsstellung der drehbare Teil des Gestell nicht weiterbewegt werden kann, sondern die Trennwände mit dem Becken kollidieren und so eine weitere Drehung des Gestell verhindern.

Des Weiteren ist vorgesehen, dass in der Betäubungsstellung kein Bereich des Beckens über den durch die Trennwände begrenzten Sektor vorsteht. Wie bereits in den beiden vorhergehenden Absätzen erklärt wurde, sind die Form des Beckens der Betäubungsstation und die Form, die zwei benachbarte Trennwände miteinander einschließen aufeinander abgestimmt, um eine Weiterdrehung des Gestells während des Betäubungsvorgangs zu verhindern. Gleichzeitig soll ein vertikales Anheben des Beckens nur möglich sein, wenn sich das Gestell mit den Trennwänden in einer dafür geeigneten Position befindet. Das Becken muss für diese Zwecke so beschaffen sein, dass kein Bereich des Beckens über die Sektorfläche hinaussteht, die von zwei benachbarten Trennwänden eingeschlossen wird.

Vorteilhafter Weise ist vorgesehen, dass das angehobene Becken eine Drehbewegung des Gestells um die Drehachse verhindert. Durch diese Ausgestaltung wird sichergestellt, dass der Betäubungsvorgang, der ja nur stattfindet wenn sich das Becken in einer angehobenen Position befindet, nicht durch eine Weiterdrehung des Gestells unterbrochen wird.

In einer weiteren bevorzugten Ausführungsform ist vorgesehen, dass ein Handgriff und/oder eine Lagerung zur manuellen, vertikalen Verstellung der Position des Beckens vorgesehen sind. In dieser Ausführungsform ist zunächst ein Handgriff vorgesehen mit dessen Hilfe der Bediener das Becken der Betäubungsstation in vertikaler Richtung auf und ab bewegt. Dieser Handgriff so gestaltet, dass er durch die Schutzwand, die sich zwischen Bediener und Betäubungsstation befindet hindurchragt. Weiterhin ist der Handgriff elektrisch isoliert ausgebildet, so dass sichergestellt ist, dass durch diesen Handgriff kein Strom auf den Bediener übertragen wird. Weiterhin ist eine Lagerung vorgesehen, welche die vertikale Bewegung des Beckens führt. Diese Lagerung ist beispielsweise zwischen dem feststehenden Träger des Gestells und dem Becken angebracht. Geeignete Ausführungsformen sind hier lineare Gleitlagerungen oder Kugelkäfiglagerungen wobei die Erfindung nicht auf diese Ausführungsformen beschränkt ist. Vielmehr können auch andere Typen von Lagern zum Einsatz kommen, die eine vertikale Bewegung des Beckens ermöglichen und führen. In einer besonderen Ausführungsform, beispielsweise bei der Verwendung eines kleinen und sehr leichten Beckens, wäre es auch denkbar das Becken nur über den Handgriff zu positionieren, beispielsweise an der Schutzwand einzuhängen, und keine weitere Lagerung für das Becken vorzusehen. In einer vorteilhaften Ausgestaltung ist vorgesehen, dass die Schutzwand einen Führungsschlitz zur Führung des Handgriffs des Beckens aufweist. Ein Führungsschlitz ermöglicht zum einen ein Hindurchragen eines Handgriffs durch die Schutzwand. Dies ist erforderlich, damit der Bediener der Vorrichtung das Becken der Betäubungsstation erreichen und verstellen kann. Ein in vertikaler verlaufender Führungsschlitz sorgt dabei für eine Führung der Bewegung des Beckens, zusätzlich zu einer möglicherweise vorhandenen anderen Lagerung des Beckens am Gestell der Vorrichtung. Weiterhin ist es möglich, vom in vertikaler Richtung verlaufenden Führungsschlitz horizontal verlaufende Abzweigungen vorzusehen, die als Rastpositionen für den Handgriff dienen. Das Becken kann so in einer bestimmten vertikalen Position fixiert werden, indem der Handgriff zunächst in vertikaler Richtung bis zur gewünschten Höhe bewegt wird und anschließend in einer Horizontalbewegung in eine Rastposition geführt und dort abgelegt wird. Ist der Handgriff in einer solchen Rastposition abgelegt, kann der Bediener den Handgriff loslassen und das Becken verbleibt trotzdem in der gewünschten vertikalen Lage. Dies ist besonders günstig während der Durchführung des Betäubungsvorgangs. Alternativ kann auch eine Rastvorrichtung vorgesehen werden, bei der zur Fixierung des Beckens keine Horizontalbewegung nötig ist, sondern durch separate Rastelemente realisiert ist. So könnte an der Schutzwand eine Schiene mit in geringen Abständen eingebrachten Bohrungen vorgesehen sein, in die ein Rastbolzen, welcher am Handgriff beweglich angebracht ist, einrastet.

Des Weiteren ist vorgesehen, dass eine Totmannschaltung zum Schließen des Betäubungsstromkreises vorgesehen ist. In dieser Ausführungsform der Erfindung wird durch eine technische Maßnahme sichergestellt, dass der Bediener der Schlachtvorrichtung aufmerksam und bei Bewusstsein ist während der elektrische Betäubungsvorgang ausgelöst wird. Es sind dabei Schaltelemente in der Art einer Totmannschaltung vorgesehen, durch die der Betäubungsvorgang ausgelöst werden muss. Diese Schaltelemente sind so angeordnet, dass sie nur von einer Person erreicht werden können, die bei Bewusstsein ist. Dies kann beispielsweise dadurch erreicht werden, dass zwei Schalter vorgesehen sind, die gleichzeitig zum Auslösen des Betäubungsvorganges betätigt werden müssen. Diese Schalter sind dabei so angeordnet, dass sie nur von einer auf eigenen Beinen stehenden Person erreicht werden können und liegen so weit auseinander dass die stehende Person zwei Hände zum gleichzeitigen Betätigen beider Schalter benötigt. Ist der Bediener in gesundheitlich schlechtem Zustand oder von seiner Arbeit stark abgelenkt ist es ihm nicht möglich die beiden Schalter gleichzeitig zum Auslösen des Betäubungsvorgangs zu betätigen. Somit wird das Risiko eines ungewollten Auslösens des Betäubungsvorgangs eliminiert bzw. sehr stark reduziert. Selbstverständlich sind auch andere Ausführungsformen einer Totmannschaltung für das Auslösen des Betäubungsvorgangs möglich. So können beispielsweise auch Bewegungsmelder, Infrarotsensoren, Kameras oder taktile Bewegungsmelder dazu verwendet werden festzustellen, ob der Bediener aufmerksam und in gesundheitlich gutem Zustand ist.

Vorteilhafter Weise ist vorgesehen, dass ein Sicherheitsschalter vorgesehen ist, der das Schließen des Betäubungsstromkreises freigibt, wenn sich das Becken in einer gegenüber der Ruhestellung vertikal angehobenen Position befindet. In dieser Ausführungsform ist ein Sicherheitsschalter vorgesehen, der ein Auslösen des Betäubungsvorgangs verhindert, solange sich das Becken der Betäubungsstation in seiner Ruheposition ganz unten in vertikaler Richtung befindet. In dieser Lage des Beckes ist es ausgeschlossen, dass sich ein Kopf eines zu betäubenden Tieres in der Flüssigkeit im Becken befindet. Somit es auch ausgeschlossen, einen sinnvollen Betäubungsvorgang durchzuführen. Der vorgesehene Sicherheitsschalter verhindert daher in der Ruheposition des Beckens jegliches Auslösen eines Betäubungsvorgangs. Dadurch können in der Ruhelage des Beckens ohne Risiko für den Bediener Wartungsarbeiten oder Ähnliches an der Betäubungsstation durchgeführt werden. Weiterhin ist in dieser Ruhelage des Beckens auch eine weitere Drehung des karussellartigen Gestells möglich und die Zeit während der Drehbewegung gegen ungewollte Betäubungsvorgangs abgesichert. Im Umkehrschluss gibt der Sicherheitsschalter das Schließen des Betäubungsstromkreises frei, sobald das Becken in vertikaler Richtung von seiner Ruheposition wegbewegt wird.

Des Weiteren ist vorgesehen, dass zusätzlich zu der Betäubungsstation weitere Stationen zur Schlachtung vorgesehen sind wie zum Beispiel Stationen zur Tötung, zum Ausbluten, zum Brühen und zum Entfedern der zu schlachtenden Tiere. Der Raum neben oder außerhalb der Betäubungstation steht für die Anordnung unterschiedlichster, anderer Stationen zur Verfügung. Es ist dabei besonders günstig diese Stationen so auszubilden, dass ein Tier nach einem Umlauf um die karussellartig ausgebildete Schlachtvorrichtung geschlachtet und für die nächsten Verarbeitungsschritte vorbereitet ist.

Geschickter Weise ist vorgesehen, dass ein Auffangbecken vorgesehenen ist, welches sich außerhalb der Betäubungsstation und unterhalb der Trennwände befindet. In dieser Ausführungsform ist ein Auffangbecken vorgesehen, welches außerhalb der Betäubungsstation angeordnet ist. Dieses Auffangbecken kann in einer anderen Station der Schlachtvorrichtung beispielsweise zum Auffangen von Blut bei der Schlachtung oder zum Auffangen von Federn beim Entfedern dienen. Dieses Auffangbecken ist unterhalb der Trennwände angeordnet, so dass sich diese Trennwände frei und oberhalb des Auffangbeckens weiterdrehen können.

In einer vorteilhaften Ausgestaltung ist vorgesehen, dass die Schlachtvorrichtung eine Transportpalette aufweist, welche den Träger mit dem Gestell aufnimmt und in einer Transportstellung der Schlachtvorrichtung kein Element der Schlachtvorrichtung die Grundfläche der Transportpalette überragt. Das Vorsehen einer Transportpalette unterhalb der Schlachtvorrichtung ermöglicht einen sehr einfachen Transport der Vorrichtung mit einem Hubwagen oder Gabelstapler. Durch eine Transportstellung, in der kein Element der Vorrichtung die Grundfläche der Transportpalette überragt wird sichergestellt, dass sich eine derartige Schlachtvorrichtung komfortabel durch Türen oder Tore bewegen lässt. Dadurch kann die Schlachtvorrichtung mobil und flexibel von einem Standort zu einem anderen transportiert werden und somit an verschiedenen Orten eingesetzt werden.

Vorteilhafter Weise ist vorgesehen, dass die Baugruppen und Einzelteile der Schlachtvorrichtung zerlegbar und zusammenbaubar sind, wodurch ein Transport durch Gebäudeöffnungen, wie beispielsweise Türen, ermöglicht wird. Durch eine zerlegbare Gestaltung der Schlachtvorrichtung wird der Transport dahingehend erleichtert, dass die Vorrichtung auch durch Gebäudeöffnungen passt. Die Stellen, an denen die Vorrichtung zerlegt und wieder zusammengebaut wird sind dabei so gestaltet, dass alle Umbauten einfach und schnell durchgeführt werden können. Damit wird ermöglicht, dass die Vorrichtung sowohl durch enge Maueröffnungen wie Stalltüren transportiert werden kann als auch, dass die Schlachtvorrichtung nach einem Transport schnell wieder einsatzfähig ist. Diese Ausführungsform ist somit besonders vorteilhaft, wenn die Schlachtvorrichtung oft transportiert und an verschiedenen Orten eingesetzt werden soll. Eine derartig ausgeführte Schlachtvorrichtung kann auf den horizontalen Grundabmessungen einer Euro-Palette (80 x 120 cm) platziert und transportiert werden, wobei eine Höhe von 180 cm nicht überschritten wird.

Des Weiteren ist günstiger Weise vorgesehen, dass eine Tötungsstation vorgesehen ist, bei der die Tötung mittels eines Stromschlages erfolgt. Es ist auch möglich Kleintiere mittels eines Stromschlages nicht nur zu betäuben sondern zu töten. In einer weiteren Ausführungsform der Erfindung ist somit eine Tötungsstation vorgesehen, die eine Tötung von Kleintieren durch einen Stromschlag möglich macht. Dabei kann diese Tötungsstation ähnlich wie die bereits beschriebene Betäubungsstation ausgeführt sein. Allerdings sind auch andere Ausführungsformen einer elektrischen Tötungsstation für Kleintiere mit zu der Erfindung gehörend. Eine Tötung der Tiere kann auch in der bereits vorhandenen Betäubungsstation erfolgen, wobei höhere Stromstärken bzw. Ladungsmengen als zur Betäubung der Tiere eingesetzt werden.

In einer vorteilhaften Ausgestaltung ist vorgesehen, dass eine Verlängerung vorgesehen ist, die an einem Aufhängeelement des Gestells lösbar befestigt ist, wobei die Verlängerung mehrere Halter aufweist und die vertikale Distanz zwischen diesen Haltern der Verlängerung und dem Becken geringer ist, als die vertikale Distanz zwischen den Haltern, die am Aufhängeelement angebracht sind, und dem Becken und/oder eine im Wesentlichen in vertikaler Richtung verlaufende Haltestange vorgesehen ist, wobei die Haltestange am Gestell oder einem Aufhängeelement derart befestigt ist, dass ihre vertikale Position zum Gestell einstellbar ist, und die Haltestange eine Manschette aufweist, die vorgesehen ist um die Position des Halses des zu schlachtenden Tieres gegenüber der Haltestange zu fixieren. In einer weiteren Ausführungsform der Erfindung sind zusätzlich zur bisher beschriebenen Schlachtvorrichtung weitere Hilfsmittel oder Bauteile vorgesehen, die mit der Schlachtvorrichtung kombiniert werden können. Für den Fall, dass kleine Tiere geschlachtet werden sollen ist es hinderlich, wenn das Becken, welches zur Betäubung der Tiere genutzt wird, über eine große Distanz in vertikaler Richtung bewegt werden muss, bis der Kopf des zu betäubenden Tieres erreicht ist. Daher ist eine Verlängerung vorgesehen, mit der diese Distanz des Kopfes eines kleinen Tieres zum Becken verkürzt werden kann. Die Verlängerung wird dabei am Gestell der Schlachtvorrichtung eingehängt und kleine zu schlachtende Tiere werden dann mit den Füßen an der Verlängerung eingehängt und nicht mehr direkt am Aufhängeelement des Gestells der Schlachtvorrichtung. Weiterhin ist eine Haltestange vorgesehen, welche auch unabhängig von der bereits beschriebenen Verlängerung eingesetzt werden kann. Manche Arten von Geflügel tendieren dazu, dass sie nach dem Einhängen am Gestell ihrer Hälse stark bewegen und vor allem nach oben recken. Dadurch wird es sehr schwer, derartige Arten von Geflügel sicher zu betäuben. Aufgrund der Halsbewegungen ist nicht sichergestellt, ob der Kopf der Tiere auch wirklich in das Becken taucht und die Tiere sicher betäubt werden. Eine Haltestange ermöglicht die Fixierung des Halses und damit des Kopfes von Geflügel in einer vertikal nach unten orientierten Position. Dadurch ist sichergestellt, dass der Kopf dieser Tiere in die Flüssigkeit des nach oben bewegten Beckens taucht und der Betäubungsvorgang vorschriftsmäßig durchgeführt werden kann. Für eine optimale Anpassbarkeit der Haltestange an verschiedene Arten von Tieren, ist die Haltestange in ihrer Position zum Gestell vertikal verstellbar ausgeführt.

Geschickter Weise ist vorgesehen, dass ein Wiegeelement vorgesehen ist, welches zwischen dem Träger und dem Gestell angeordnet ist. In dieser Ausführungsform wird kontinuierlich oder in diskreten Messintervallen das Gewicht des Gestells durch ein Wiegeelement bestimmt. Dieses Wiegeelement ist zwischen dem unbeweglichen Träger und dem daran drehbar gelagerten Gestell angeordnet. Somit ermittelt das Wiegeelement stets das gesamte Gewicht des Gestells. Zu diesem Gewicht gehört jeweils auch das Gewicht der eingehängten Tiere und auch das Gewicht von möglicherweise verwendeten Verlängerungen oder Haltestangen. Das Wiegeelement dient aber letztlich dazu, das Gewicht der einzelnen zu schlachtenden Tiere zu ermitteln und dieses individuelle Gewicht als Eingangsinformation für weitere Schritte oder zur Dokumentation zu verwenden. Das Gewicht eines einzelnen Tieres kann mithilfe des Wiegeelementes einfach durch Differenzbildung zwischen dem Gewicht des Gestells vor dem Einhängen des Tieres und dem Gewicht des Gestells nach dem Einhängen des Tieres bestimmt werden. Es könnte beispielsweise ein Sensor vorgesehen sein, der erkennt wann das Gestell von einer Position zur nächsten bewegt wird. Bei jedem Signal dieses Sensors wird ein Messwert für das Gewicht des gesamten Gestells mit allen Anhängen ermittelt. Das Gewicht des zuletzt eingehängten Tieres ergibt sich dann aus der Differenz zwischen dem vorletzten und dem letzten Messwert. Alternativ kann ein Eingabeelement vorgesehen seien, welches bei Betätigung durch den Bediener jeweils einen Messwert speichert. Der Bediener kann dann das Betätigungselement vor und nach dem Einhängen eines Tieres betätigen und so das individuelle Gewicht ermitteln lassen. In entsprechender Vorgehensweise kann auch das Aushängen des geschlachteten Tieres an der letzten Station bei der Bestimmung des individuellen Gewichtes von neu eingehängten Tieren verrechnet werden. Das ermittelte, individuelle Gewicht jeden einzelnen Tieres kann nun für verschiedene vorteilhafte nächste Schritte verwendet werden. So ist es beispielsweise möglich die zur Betäubung verwendete Stromstärke und/oder Ladungsmenge automatisch in Korrelation zum Gewicht des Tieres einzustellen. Je größer das Gewicht eines Tieres ist, desto mehr Ladungsmenge wird zur Betäubung benötigt. Weiterhin ist es möglich, das individuelle Gewicht auch in die bereits beschriebene Datenarchivierung und Dokumentation der Betäubungs- und Schlachtvorgänge aufzunehmen. Durch den Gewichtswert kann dann nachträglich nachgewiesen werden, dass alle Tiere mit individuell geeigneter Stromstärke bzw. Ladungsmenge betäubt wurden. Diese ermittelten Istwerte können dann direkt mit gesetzlich vorgeschriebenen Sollwerten verglichen werden. Zusätzlich ist es möglich mithilfe des Wiegeelementes am Gestell eingehängt Hilfsmittel wie zum Beispiel eine Verlängerung zu erkennen. Das Anbringen einer Verlängerung erzeugt eine Erde des Gesamtgewichtes des Gestells. Diese Gewichtserhöhung wird dann durch den Bediener so quittiert oder bestätigt, dass diese Gewichtserhöhung nicht mit dem Gewicht eines eingehängten Tieres verwechselt wird. Alternativ kann der angelegte Betäubungsstrom auch unabhängig vom ermittelten Gewicht des Tieres erfolgen. Denkbar ist beispielsweise, den Betäubungsstrom bzw. die zu Betäubung verwendete Ladungsmenge lediglich von der Art des Tieres abhängig zu machen.

Die Aufgabe der Erfindung wird auch gelöst durch ein Verfahren nach Anspruch 15 für das Betäuben von Kleintieren, unter Verwendung einer Schlachtvorrichtung nach einem der Ansprüche 1-14, umfassend die Schritte:
- Einhängen des zu betäubenden Tiers am Gestell der Schlachtvorrichtung,
- manuelles Weiterdrehen des Gestells der Schlachtvorrichtung bis sich das zu betäubende Tier in der Betäubungsstation befindet,
- manuelles Anheben eines Beckens, manuelles oder automatisches Auslösen des Betäubungsvorganges, und Verweilen des Gestells und des zu betäubenden Tieres in konstanter Position während des gesamten Betäubungsvorganges.

Bei einem erfindungsgemäßen Verfahren wird ein betäubendes Tier zunächst direkt am beweglichen Gestell einer Schlachtvorrichtung eingehängt. Das Gestell wird anschließend manuell weiter gedreht und das Tier somit in eine Betäubungsstation bewegt. Nach diesem Transfer des Tiers in die Betäubungsstation der Schlachtvorrichtung befindet sich das Gestell wieder in Ruhe. Als Vorbereitung für die Betäubung wird nun ein Becken manuell in vertikaler Richtung nach oben bewegt, solange bis der Kopf des Tieres in eine leitende Flüssigkeit im Inneren des Beckens taucht. Zu diesem Zeitpunkt wird dann manuell oder automatisch der eigentliche Betäubungsvorgangs ausgelöst, bei dem ein Betäubungsstrom durch den Körper des zu betäubenden Tieres fließt. Während des gesamten Betäubungsvorgangs durch den Fluss des Betäubungsstromes verbleibt sowohl das Gestell als auch das daran eingehängte Tier in Ruhe.

Geschickter Weise ist vorgesehen, dass das Gesamtgewicht des Gestells durch ein Wiegeelement vor und nach dem Einhängen des zu betäubenden Tieres am Gestell bestimmt wird und aus der Differenz der beiden Messwerte das Gewicht des zu betäubenden Tieres berechnet wird.

In den Zeichnungen ist die Erfindung insbesondere in einem Ausführungsbeispiel schematisch dargestellt. Es zeigen:
- Fig. 1: eine dreidimensionale Ansicht einer Ausführungsform der Erfindung,
- Fig. 2a: eine geschnittene Seitenansicht einer Ausführungsform der Erfindung,
- Fig. 2b: eine Vorderansicht einer Ausführungsform der Erfindung,
- Fig. 2c: eine Draufsicht einer Ausführungsform der Erfindung,
- Fig. 3: eine dreidimensionale Ansicht einer Verlängerung,
- Fig. 4: eine dreidimensionale Ansicht einer Haltestange,
- Fig. 5: eine teilweise geschnittene Seitenansicht einer Ausführungsform der Erfindung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische Lösungen darstellen.

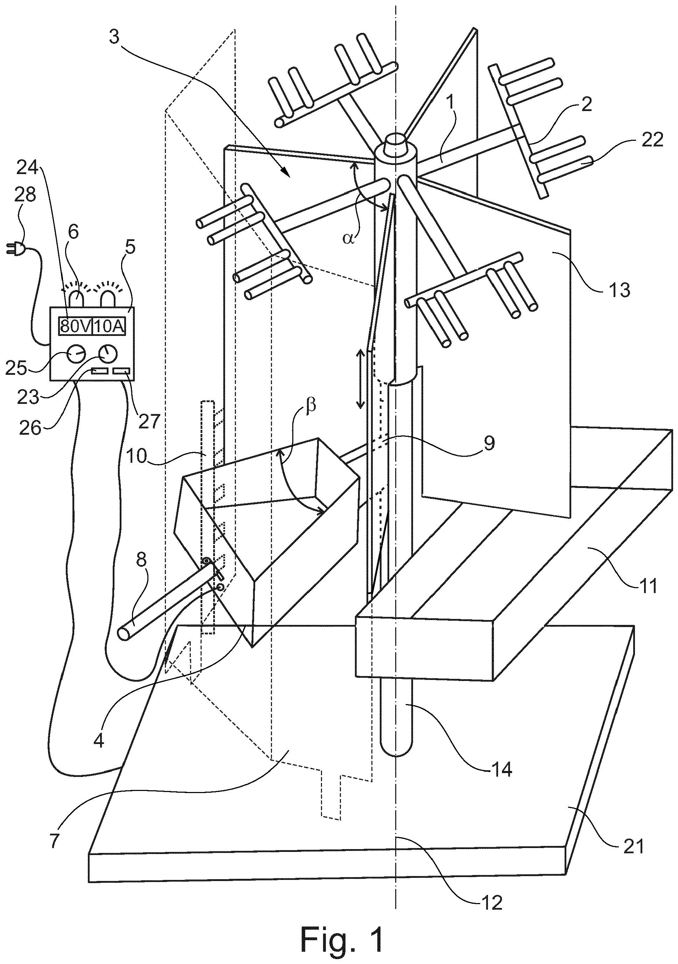

Fig. 1 zeigt eine dreidimensionale Ansicht einer Ausführungsform der Erfindung. Die gezeigte Schlachtvorrichtung ist auf einem, im Betrieb der Vorrichtung unbeweglichen Fuß 21 aufgebaut. Dieser Fuß 21 bildet die Basis für einen im Betrieb ebenfalls unbeweglichen Träger 14. Im dargestellten Fall wird der Fuß 21 von einer Metallplatte gebildet. Selbstverständlich sind aber auch andere Ausführungsformen für den Fuß 21 möglich wie beispielsweise ein Aufbau aus Profilleisten, ein aus Metallrohren geschweißtes Gestell oder auch eine Konstruktion aus Kunststoff. Der Fuß 21 gibt dem Träger 14 Halt und stützt sämtliche Kräfte, die im Betrieb der Schlachtvorrichtung entstehen, gegen den Boden ab. An dem nach oben gerichteten Ende des Trägers 14 ist das drehbar gelagerte Gestell 1 angeordnet. Dieses Gestell 1 ist drehbar um die Drehachse 12 gelagert, welche in Fig. 1 gestrichelt dargestellt ist. Das Gestell 1 ist, von oben betrachtet, in vier Sektoren von je 90° aufgeteilt. Ein solcher 90°-Winkel ist in Fig. 1 mit α bezeichnet. Die Grenze zwischen diesen Sektoren bildet jeweils eine Trennwand 13. Es ist allerdings auch möglich, dass Gestell 1 in eine andere Anzahl von Sektoren aufzuteilen, wodurch sich dann dementsprechend andere Winkel ergeben, die durch benachbarte Trennwände 13 eingeschlossen werden. In der Mitte der Sektoren befindet sich jeweils radial nach außen gerichtet ein Aufhängeelement 2. Die Aufhängeelemente 2 sind im weitesten Sinne gabelartig ausgebildet. Die bezogen auf die Drehachse 12 nach außen gerichteten Enden der Aufhängeelemente 2 dienen als Aufnahme für die Füße der zu schlachtenden Kleintiere. Das Kleintier, beispielsweise das Geflügel, wird mit dem Kopf nach unten an den Aufhängeelementen 2 eingehängt, wobei die Beine zwischen die Halter 22 eingeführt werden. Im dargestellten Fall sind an jedem Aufhängeelement 2 vier Halter 22 angebracht, wobei jeweils zwei dieser Halter die Aufnahme für einen Fuß eines zu schlachtenden Tieres bilden. Alternativ wäre es aber auch möglich eine größere Anzahl an Haltern 22 vorzusehen, die dann mehrere mögliche Positionen zum Einhängen von Füßen von zu schlachtenden Tieren bilden. Solche unterschiedlichen Einhängepositionen ermöglichen ein komfortables Einhängen von Tieren unterschiedlicher Körpergröße. Neben der dargestellten gabelförmigen Ausführungsform der Aufhängeelemente 2 wäre es auch möglich, anstelle von zwei benachbarten, zylindrischen Haltern ein konisches, trichterartiges Element vorzusehen, dessen größere Öffnung nach oben weist. Die Beine des zu betäubenden Tieres können in dieser Ausführungsform über einen vertikal verlaufenden Schlitz in den konusförmigen Halter eingeführt werden. Die Füße des Tieres liegen dann auf der trichterartigen, inneren Konusfläche auf. Dadurch wird die Auflagefläche zwischen den Füßen und dem Aufhängeelement 2 deutlich vergrößert, was wiederrum zu einer besseren Stromübertragung zwischen dem Aufhängeelement 2 und den Füßen des Tieres führt. Weiterhin ist eine konusartige Ausführung des Halters besser für die Aufnahme mehrerer unterschiedlicher Fußtypen von unterschiedlichen Tierarten, sowie zur Aufnahme verschieden großer Füße geeignet. Das drehbar gelagerte Gestell 1 dient dazu, Tiere, die an den Aufhängeelementen 2 aufgehängt sind, von einer Station der Schlachtvorrichtung zur nächsten Station weiter zu drehen. Im Folgenden wird zunächst auf die Station eingegangen, die in Fig. 1 nach unten links weist. Es handelt sich dabei um die Betäubungsstation 3. Im unteren Bereich dieser Betäubungsstation 3 ist das Becken 4 angebracht. Dieses Becken 4 ist am Träger 14 über die Lagerung 9 vertikal beweglich gelagert und aus einem elektrisch nicht leitenden Material aufgebaut. Das Becken 4 wird im Betrieb mit Flüssigkeit, beispielsweise mit Wasser gefüllt. Beim Betäubungsvorgang wird das Becken 4 in vertikaler Richtung soweit nach oben bewegt, bis der Kopf des zu betäubenden Tieres (nicht dargestellt) in diese Flüssigkeit taucht. Anschließend wird der Betäubungsvorgang mittels eines Stromstoßes durchgeführt. Der Stromkreis für die Betäubung verläuft dabei vom Gestell 1 bzw. vom Aufhängeelement 2 durch den Körper des zu betäubenden Tieres in die Flüssigkeit des Beckens 4. Es ist auch möglich, den Stromfluss in die entgegengesetzte Richtung zu gestalten, nämlich von der Flüssigkeit des Beckens 4 durch den Körper des Tieres zum Aufhängeelement. Zur Betäubung kann sowohl Gleich- als auch Wechselstrom verwendet werden. Den nötigen Betäubungsstrom stellt die Stromquelle 5 zur Verfügung. Diese Stromquelle 5 weist einen Anschluss zum Gestell 1 auf, sowie einen weiteren Anschluss zur Flüssigkeit des Beckens 4. An dem Becken 4 ist ein Handgriff 8 angebracht. Der Bediener der Schlachtvorrichtung kann die vertikale Position des Beckens 4 über diesen Handgriff 8 verstellen. Der Raum der Betäubungsstation 3 ist in Richtung zum Bediener durch die gestrichelt dargestellte Schutzwand 7 abgetrennt. Diese Schutzwand 7 ist ortsfest und aufklappbar aber dreht sich nicht zusammen mit dem Gestell 1 weiter. Die Schutzwand 7 ist im dargestellten Fall über zwei Stützen mit dem Fuß 21 verbunden, es sind aber auch andere Befestigungsmöglichkeiten mit zur Erfindung gehörend. Sinn dieser Schutzwand 7 ist es, den Bediener vom Betäubungsstromkreis abzuschirmen und ihn vor ungewollten Stromschlägen zu schützen. In der Schutzwand 7 befindet sich ein vertikaler Führungsschlitz 10, durch welchen der Handgriff 8 der Beckens 4 ragt. Das elektrisch gegenüber dem Gestell 1 und dem Träger 14 isolierte Becken 4 kann so mittels des elektrisch isolierten Handgriffs 8 vom Bediener in vertikaler Richtung positioniert werden. Zur Fixierung des Beckens in einer bestimmten vertikalen Lage sind vom Führungsschlitz 10 abzweigende Rastpositionen vorgesehen. Der Handgriff 8 kann nach einer vertikalen Bewegung innerhalb des Führungsschlitzes 10 über eine horizontale Bewegung in eine solche Rastposition geführt werden. Es ist auch möglich, dass das Becken 4 ausschließlich über eine Befestigung an der Schutzwand 7, beispielsweise in einer Rastposition des Handgriffes 8 gelagert bzw. befestigt wird. In dieser Ausführungsform ist die Lagerung 9 nicht nötig und wird auch nicht vorgesehen. Zur Durchführung des Betäubungsvorganges wird das Becken 4 nach oben bewegt, bis der Kopf des zu betäubenden Tieres in die Flüssigkeit im Becken 4 taucht. In dieser vertikal erhöhten Betäubungsposition des Beckens 4 befindet sich dieses zwischen zwei benachbarten Trennwänden 13. Dadurch wird ein Weiterdrehen des Gestells 1 verhindert, da die radial nach außen ragenden Trennwände 13 am hochgefahrenen Becken 4 anschlagen. Im dargestellten Fall ist der Winkel des Beckens 4 im Wesentlichen gleich groß zum Winkel a, der von zwei benachbarten Trennwänden 13 gebildet wird. Auch die Form und vor allem die Grundfläche des Beckens 4 ist auf die Form und die Fläche eines durch zwei Trennwände 13 gebildeten Sektors abgestimmt. Durch diese geometrische Abstimmung wird die Möglichkeit zur Bewegung des Gestells 1 bei nach oben bewegtem Becken 4 minimiert. Dadurch ist sichergestellt, dass der Betäubungsvorgang nicht durch eine Weiterbewegung des Gestells 1 versehentlich unterbrochen wird. Zusätzlich wird gewährleistet, dass die Betäubungsstation 3 auch zur Seite hin von den Trennwänden 13 abgeschirmt ist und somit vom Betäubungsstromkreis keine Gefahr für den oder die Bediener der Schlachtvorrichtung ausgeht. Die Stromquelle 5 ist mit einem elektrischen Pol am drehbaren Gestell 1 angeschlossen. Die Zuleitung wird im dargestellten Fall elektrisch isoliert durch den Fuß 21 und den Träger 14 zum beweglichen Teil des Gestells 1 geführt. Durch eine ebenfalls elektrisch isolierte Lagerung zwischen Träger 14 und dem drehbaren Teil des Gestells 1 ist sichergestellt, dass die Basis der Schlachtvorrichtung, nämlich Fuß 21 und Träger 14 zu keinem Zeitpunkt mit der Stromquelle 5 elektrisch verbunden sind. Der zweite elektrische Pol ist am Becken 4 angeschlossen, derart, dass eine leitende Verbindung zu der sich im, zur Umgebung elektrisch isolierten Becken 4 befindlichen Flüssigkeit hergestellt wird. Der Stromfluß kann in der beschriebenen Anordnung selbstverständlich in beide Richtungen erfolgen. Dabei ist in der Stromzuführung zum Becken 4 ein Sicherheitsschalter angebracht, der in Fig. 1 nicht dargestellt ist. Dieser Sicherheitsschalter ermöglicht ein Schließen des Betäubungsstromkreises nur für den Fall, dass das Becken 4 sich in einer vertikalen erhobenen Position befindet. Befindet sich das Becken 4 dagegen in vertikaler Richtung ganz unten wird ein Auslösen des Betäubungsvorgangs durch den Sicherheitsschalter verhindert. Damit ist ein Auslösen des Betäubungsvorgangs stets verhindert, solange das Gestell 1 nicht durch das Becken 4 an einer Weiterdrehung gehindert wird und somit der Raum der Betäubungsstation nach allen Seiten sicher geschützt ist.

Die dargestellte Stromquelle 5 liefert die elektrische Energie für den Betäubungsvorgang. Da unterschiedliche Größe bzw. unterschiedliches Gewicht der zu betäubenden Tiere unterschiedliche Stromstärken erfordern ist die Stromquelle regelbar gestaltet. Im dargestellten Fall kann über den Drehregler 23 die Stromstärke für die Betäubung eingestellt werden. Die Stromquelle 5 regelt die Spannung dann automatisch entsprechend der ausgewählten Stromstärke. Beide elektrischen Größen werden auf dem Display 24 angezeigt. Ein weiteres entscheidendes Kriterium für den Betäubungsvorgang ist die Zeitspanne, in der diese eingestellte Stromstärke im Betäubungsstromkreis fließt. Diese Zeitspanne ist ebenfalls einstellbar, beispielsweise mit einem Drehregler 25. Die Stromquelle 5 weist hier zwei Anzeigen 6 auf. Die eine, als Kontrollleuchte ausgebildete Anzeige 6 zeigt einen aktuell in Durchführung befindlichen Betäubungsvorgang an. Die andere Anzeige signalisiert den erfolgreichen Abschluss eines Betäubungsvorgangs. Es wäre auch möglich weitere Anzeigen anzubringen, zum Beispiel zur Anzeige der Betriebsbereitschaft der Stromquelle. Zum Bereitmachen der Stromquelle für den Betäubungsvorgang wird der Startknopf 26 betätigt. Das eigentliche Auslösen des Betäubungsvorgangs erfolgt entweder automatisch mit dem Eintauchen des Kopfes des Tieres in die im Becken 4 befindliche Flüssigkeit oder durch eine zusätzliche manuelle oder automatische Auslösevorrichtung. Nach dem Auslösen läuft der Betäubungsvorgang automatisch ab und endet nach dem Ablauf der voreingestellten Zeitspanne für den Fluss des Betäubungsstroms. Weiterhin ist es auch möglich, das Auslösen des Betäubungsvorgangs über eine so genannte "Totmannschaltung" zu zusätzlich abzusichern. Dabei sind mehrere Schalter, deren Betätigung eine Bedingung zum Auslösen des Betäubungsvorgangs sind so angebracht, dass sie nur von einem aufrecht stehenden, aufmerksamen Bediener ausgelöst werden können. So könnte beispielsweise ein Sicherheitsschalter für den Auslösevorgang am Handgriff 8 und ein zweiter Sicherheitsschalter an der Stromquelle 5 angebracht sein, die neben dem Auslösen der Auslösevorrichtung gleichzeitig betätigt werden müssen. Somit ist sichergestellt, dass der Betäubungsvorgang nicht versehentlich oder unbeaufsichtigt gestartet wird. Die Stromquelle 5 weist auch eine Funktion zum Abspeichern von Daten zu den durchgeführten Betäubungsvorgängen auf. Dabei werden zumindest der Betäubungsstrom, die Zeitspanne des Stromflusses sowie Datum und Uhrzeit des Betäubungsvorgangs abgespeichert. Die Stromquelle 5 weist eine Datenschnittstelle 27 auf, über die diese abgespeicherten Daten ausgelesen werden können. Diese Datenschnittstelle 27 kann beispielsweise als USB Anschluss, alles LAN-Ethernet-Schnittstelle oder Ähnliches ausgeführt sein. Die Stromquelle 5 in Fig. 1 bezieht die benötigte Energie über den Netzstecker 28. In einem dezentralen Betrieb der Schlacht-vorrichtung wäre es allerdings auch möglich die Stromquelle aus einer Batterie zu speisen und unabhängig vom Stromnetz zu sein.

Abseits der Betäubungsstation 3 ist das Auffangbecken 11 angebracht. Es ist so angeordnet, dass es sich unter zwei von der Betäubungsstation 3 unabhängigen Stationen der Schlachtvorrichtung befindet. Das Auffangbecken 11 kann beispielsweise zum Auffangen von Blut nach der Tötung der Tiere dienen. Weiterhin kann das Auffangbecken 11 auch zum Auffangen von Federn unter einer Entfederungsstation dienen. Die drei, neben der Betäubungsstation vorhandenen Stationen der Schlachtvorrichtung sind im Ausführungsbeispiel von Fig. 1 nicht näher ausgeführt. Diese Stationen können je nach Bedarf verwendet und ausgebaut werden. Mögliche Verwendungen könnten beispielsweise als Tötungs- oder Ausblutungsstation, als Brühstation oder als Entfederungsstation sein. Ebenfalls denkbar wäre es, eine Station ausschließlich zum Einhängen bzw. Aushängen der zu schlachtenden Kleintiere zu verwenden.

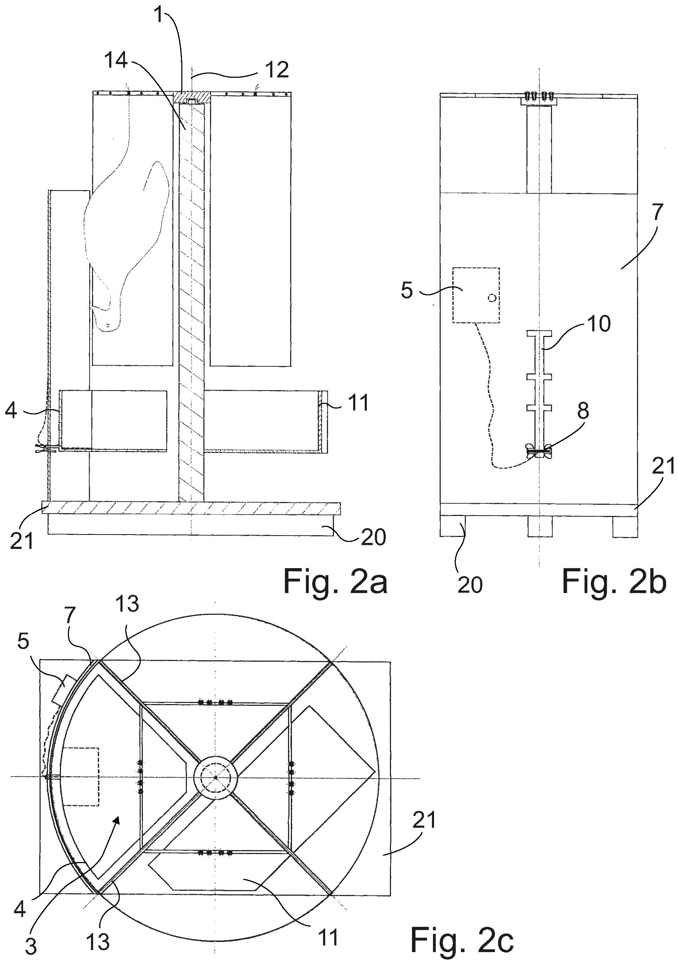

Fig. 2a zeigt eine geschnittene Seitenansicht einer Schlachtvorrichtung. Am oberen Ende der Drehachse 12 ist die drehbare Lagerung zwischen dem Träger 14 und dem beweglichen Gestell 1 zu sehen. Weiter unten ist das Becken 4 der Betäubungsstation sowie auf der gegenüberliegenden Seite des Trägers 14 das Auffangbecken 11 gezeigt. Die Schlachtvorrichtung steht hier mit dem Fuß 21 auf einer Transportpalette 20. Diese Transportpalette 20 ermöglicht einen einfachen Transport der gesamten Vorrichtung, beispielsweise mit einem Hubwagen oder einem Gabelstapler. Die Vorrichtung ist somit mobil und kann an verschiedenen Orten, beispielsweise in verschiedenen Ställen eingesetzt werden.

Fig. 2b zeigt Eine Vorderansicht auf eine Schlachtvorrichtung von der Seite aus betrachtet, wo sich die Betäubungsstation 3 befindet. Im unteren Bereich ist die Schutzwand 7 zu sehen, die hier die Sicht auf das dahinter befindliche Becken 4 verdeckt. Von dem Becken ist hier lediglich der nach vorne durch den Führungsschlitz 10 ragende Handgriff 8 zu sehen. Die Stromquelle 5 ist in der dargestellten Ausführungsform an der Schutzwand 7 befestigt. Die Kabelverbindung zum innen liegenden Becken 4 ist zu erkennen. Unterhalb der Schlachtvorrichtung befindet sich eine Transportpalette 20.

Fig. 2c zeigt eine Draufsicht von oben auf eine erfindungsgemäße Schlachtvorrichtung. Die Betäubungsstation 3 befindet sich auf der linken Seite. Aus dieser Perspektive ist die Ähnlichkeit zwischen der Grundfläche des Beckens 4 und der von zwei Trennwänden 13 gebildeten Grundfläche eines Sektors des Gestells 1 besonders gut zu erkennen. Es wird klar, dass bei nach oben gefahrenem Becken 4 eine Weiterdrehung des Gestells 1 nicht möglich ist, da die Trennwände 13 am Becken 4 anschlagen. Auf der Außenseite der Schutzwand 7 ist die dort angebrachte Stromquelle 5 zu erkennen. Das Auffangbecken 11 erstreckt sich hier unter dem nach rechts und unter dem nach unten gerichteten Sektor der Schlachtvorrichtung.

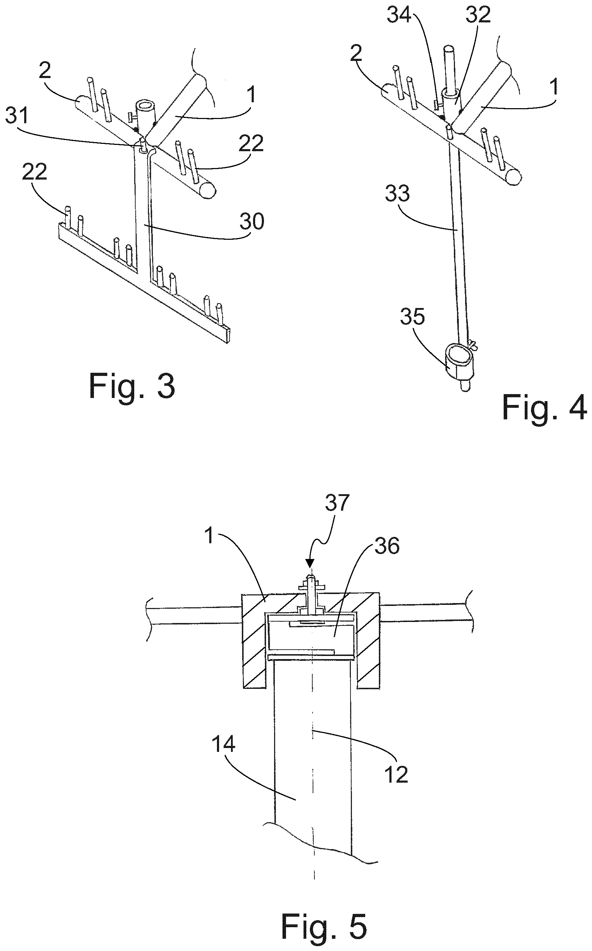

Fig. 3 zeigt eine dreidimensionale Ansicht einer Verlängerung 30. Die Verlängerung 30 dient dazu, bei kleinen zu schlachtenden oder zu betäubenden Tieren die Distanz zwischen dem Aufhängeelement 2 und dem, in den vorhergehenden Figuren dargestellten Becken 4 zu verkürzen. Im dargestellten Fall ist die Verlängerung 30 in der Form eines umgekehrten T gestaltet. Die Verlängerung 30 wird hier an einem, an dem Aufhängeelement 2 oder dem Gestell 1 angebrachten Aufhänger 31 eingehängt. Die Verlängerung weist dafür am oberen Ende ein kreisförmiges Loch auf. Am Aufhängeelement 2 ist als Gegenstück ein zylindrischer Stift befestigt, beispielsweise angeschweißt. Zum Anbringen der Verlängerung 30 wird das kreisförmige Loch einfach über den, als Zylinderstift ausgebildeten Aufhänger 31 geschoben. Es ist dabei darauf zu achten, dass zwischen dem Aufhängeelement 2 und der Verlängerung 30 eine elektrisch gut leitende Verbindung besteht. Es ist auch möglich, die elektrische Verbindung mit einem Kabel zu realisieren welches zusätzlich zu den in Fig. 3 dargestellten Bauteilen zur Verbindung von Verlängerung 30 und Gestell 1 angebracht wird. Selbstverständlich ist es auch möglich die Verbindung zwischen Verlängerung 30 und Aufhängeelement 2 durch eine Schraubverbindung, Steckverbindung oder Ähnliches zu realisieren. Die Verlängerung weist in ihrem unteren, im Betriebszustand horizontal verlaufenden Bereich mehrere Halter 22 auf. Im dargestellten Fall sind vier Paare von Haltern 22 vorgesehen. Dabei nimmt jedes Paar von Haltern 22 einen Fuß eines zu betäubenden Tieres auf. Die dargestellte Verlängerung bietet somit ausreichend Halter 22 zur Aufnahme von zwei (zweibeinigen) Tieren. Oben am Aufhängeelement 2 sind zwei Paare von Haltern 22 vorgesehen. An dem in Fig. 3 dargestellten Aufhängeelement 2 kann direkt, d.h. ohne die Verwendung der Verlängerung 30 nur ein Tier eingehängt werden. Durch die Verwendung der Verlängerung 30 können dagegen zwei Tiere an einem Aufhängeelement 2 eingehängt werden. Selbstverständlich könnten auch direkt am Aufhängelement 2 mehrere Paare von Haltern 22 angebracht werden, so dass auch hier mehrere Tiere nebeneinander aufgehängt werden können. In der Praxis werden die direkt am Aufhängeelement 2 angebrachten Halter 22 zur Betäubung von großen und schweren Tieren verwendet, während die an einer zusätzlich eingehängten Verlängerung 30 angebrachten Halter 22 zur Betäubung von kleinen und leichten Tieren eingesetzt werden.

Würden kleine und leichte Tiere direkt am Aufhängeelement 2 eingehängt, so wäre die Distanz, um die das Becken 4 vertikal nach oben bewegt werden müsste, bis der Kopf des Tieres in die Flüssigkeit taucht, sehr groß. Durch die Verwendung der Verlängerung wird die Distanz, um die das Becken nach oben bewegt werden muss, deutlich verkürzt, was die Arbeit an der Schlachtvorrichtung für den Bediener erleichtert.

Fig. 4 zeigt eine dreidimensionale Ansicht einer Haltestange 33. Die dargestellte Haltestange 33 ist im Wesentlichen vertikal orientiert am Gestell 1 und/oder am Aufhängeelement 2 befestigt. Die Haltestange 33 wird im dargestellten Fall durch eine Haltehülse 32 geführt und mit einer Klemmschraube 34 im der Haltehülse 32 lösbar fixiert. Im dargestellten Fall ist die Haltehülse 32 sowohl mit dem Gestell 1 als auch mit dem Aufhängeelement 2 über eine Schweißverbindung verbunden. Es sind aber auch andere Möglichkeiten der Verbindung von Haltehülse 32 mit dem Gestell 1 bzw. dem Aufhängeelement 2 mit zur Erfindung gehörend, wie beispielsweise Schraubverbindungen, Klebeverbindungen oder Verbindungen über Formschluss. Die Klemmschraube 34 ist in einem radial zur Haltehülse 32 orientierten Gewinde eingeschraubt und an ihrem nach außen stehenden Ende mit einem Griff versehen. Somit kann die Klemmschraube 34 von Hand geöffnet und geschlossen werden. Zur Verstellung der vertikalen Position der Haltestange 33 wird die Klemmschraube 34 geöffnet und nach dem Einstellen der gewünschten Position der Haltestange 33 wieder geschlossen. Es sind zur Fixierung der vertikalen Position der Haltestange 33 selbstverständlich auch andere Mechanismen denkbar, wie beispielsweise ein Haltestift, der in Bohrungen in der Haltestange geschoben wird oder Klemmverbindungen, die durch ein, um die Haltestange 33 herum verlaufendes Gewinde fixiert werden. Am unteren Ende der Haltestange 33 ist eine Manschette 35 axial fest mit der Haltestange 33 verbunden. Die Manschette ist dabei so gestaltet, dass sie entweder leicht von der Haltestange 33 entfernt werden oder leicht geöffnet werden kann. Im dargestellten Fall ist die Manschette über eine Verschraubung mit Flügelmutter mit der Haltestange 33 verbunden, so dass sie sehr leicht von Hand entfernt werden kann. Alternativ könnte die Manschette aufklappbar gestaltet sein. Die Haltestange 33 in Verbindung mit der Manschette 35 dient dazu, den Hals eines zu betäubenden Tieres in einer vertikalen nach unten orientierten Position zu fixieren. Besonders Gänse haben die Angewohnheit, wenn sie mit den Füßen in den Haltern 22 eingehängt werden, ihren Hals in horizontaler Richtung zur Seite zu biegen. In diesem Fall kann der Betäubungsvorgangs nicht durchgeführt werden, da der Kopf der zu betäubenden Gans nicht in die Flüssigkeit in dem vertikal nach oben bewegten Becken 4 eintaucht und somit der Betäubungsstromkreis nicht geschlossen werden kann. Diese Problematik kann vermieden werden, indem der Hals der zu betäubenden Gans nach dem Einhängen der Füße der Gans in die Halter 22, mithilfe der Manschette 35 an der Haltestange 33 fixiert wird. Dadurch ist es der Gans nicht mehr möglich, ihren Hals und Kopf in eine horizontale Position zu bewegen. Im dargestellten Fall wird dazu zunächst die Manschette 35 von der Haltestange 33 gelöst, anschließend über den Kopf der Gans geschoben und abschließend wieder an der Haltestange 33 fixiert. Alternativ kann die Manschette 35 geöffnet und geschlossen werden und dabei fest an der Haltestange 33 verbleiben. Die Verwendung einer Haltestange 33 ist selbstverständlich nicht nur auf die Betäubung von Gänsen beschränkt.

Fig. 5 zeigt eine teilweise geschnittene Seitenansicht einer Ausführungsform der Erfindung. Die dargestellte Ansicht und Perspektive ist ähnlich dem oberen Teil von Fig. 2a und zeigt die Verbindung des feststehenden Trägers 14 mit dem beweglichen Gestell 1. In der in Fig. 5 dargestellten Ausführungsform der Erfindung ist zwischen dem Träger 14 und dem Gestell 1 ein Wiegeelement 36 angebracht. Das Wiegeelement 36 ist hier als Kraftmessdose in S- bzw. Z-förmiger Ausführung dargestellt. Es können alternativ aber auch anders ausgeführte Wiegeelemente 36 zum Einsatz kommen. Am oberen Ende des Wiegeelementes 36 ist eine Lagereinheit 37 angebracht, welche wiederum das Gestell 1, drehbar gelagert um die Drehachse 12, aufnimmt. Das Wiegeelement 36 ermittelt somit stets das gesamte Gewicht des kompletten Gestells 1. In diesem ermittelten Gewichtswert ist auch das Gewicht der an der Schlachtvorrichtung eingehängten Tiere enthalten. Das Wiegeelement 36 gibt Messwerte zum Gewicht des Gestells 1 in kurzen zeitlichen Abständen aus. Aus der Veränderung dieser Messwerte kann dann durch Differenzbildung auf das Gewicht von neu am Gestell 1 eingehängten Tieren geschlossen werden. Weiterhin kann über den von dem Wiegeelement 36 ausgegebenen Messwert festgestellt werden, ob eine Verlängerung 30 oder eine Haltestange 33 an der Schlachtvorrichtung montiert wurde.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

## Patentansprüche

1. Schlachtvorrichtung für Kleintiere mit mehreren unterschiedlichen Stationen, wobei die Schlachtvorrichtung einen unbeweglichen Träger (14) und ein drehbar gelagertes, karussellartiges Gestell (1) aufweist und mehrere Aufhängeelemente (2) zum Aufhängen der zu schlachtenden Tiere am Gestell (1) aufweist, wobei ein direktes Aufhängen der Tiere am Gestell (1) an einer Einhängestation vorgesehen ist und die Tiere durch eine Drehbewegung des Gestells relativ zum unbeweglichen Teil der Schlachtvorrichtung von Station zu Station gelangen und eine Betäubungsstation (3) vorgesehen ist, mit einem Becken (4), welches in vertikaler Richtung verstellbar ist und welches zusammen mit einem Aufhängeelement (2) und einer Stromquelle (5) einen Stromkreis zum Betäuben des zu schlachtenden Tieres bildet, wobei der Strom in diesem Betäubungsstromkreis bei Erreichen einer geeigneten vertikalen Position des Beckens (4), bei welcher der Kopf des zu schlachtenden Tieres in das Wasser im Becken (4) taucht, fließt **dadurch gekennzeichnet, dass** eine Führung für die vertikale, nicht mit anderen Bewegungen gekoppelte Bewegung des Beckens (4) vorgesehen ist und das Becken (4) vor dem Betäubungsvorgang in vertikaler Richtung bewegbar ist, so lange bis der Kopf eines aufgehängten Tieres in die Flüssigkeit taucht.

2. Schlachtvorrichtung nach Anspruch 1, **dadurch gekennzeichnet, dass** eine manuelle Auslösevorrichtung zum Schließen des Betäubungsstromkreises vorgesehen ist.

3. Schlachtvorrichtung nach einem der vorhergehenden Ansprüche, **dadurch gekennzeichnet, dass** eine automatische Auslösevorrichtung vorgesehen ist, die das Becken (4) in eine geeignete vertikale Position bewegt und dann den Betäubungsstromkreis schließt.

4. Schlachtvorrichtung nach einem der vorhergehenden Ansprüche, **dadurch gekennzeichnet, dass** sich das Gestell (1) während der Betäubung des zu schlachtenden Tieres in konstanter Position gegenüber dem Träger (14) in Ruhe befindet.

5. Schlachtvorrichtung nach einem der vorhergehenden Ansprüche, **dadurch gekennzeichnet, dass** die Stromquelle (5) nach dem Schließen des Betäubungsstromkreises den Betäubungsvorgang automatisch durchführt, wobei die Stromquelle (5) auf vorher eingestellte Werte für Stromstärke und Betäubungszeit zurückgreift und/oder die Schlachtvorrichtung mindestens eine Anzeige (6) aufweist, die den Status des Betäubungsvorganges anzeigt.

6. Schlachtvorrichtung nach einem der vorhergehenden Ansprüche, **dadurch gekennzeichnet, dass** die Stromquelle (5) einen Datenspeicher aufweist, in dem die Parameter der Betäubungsvorgänge, zumindest bestehend aus Stromstärke, Betäubungszeit, Uhrzeit und Datum abgelegt werden und eine Datenschnittstelle, beispielsweise eine USB-Schnittstelle, eine mobile Speicherkarte, ein Flash-Speicher, ein Netzwerkanschluss oder Ähnliches vorgesehen ist um diese Daten aus dem Datenspeicher der Stromquelle (5) auszulesen.

7. Schlachtvorrichtung nach einem der vorhergehenden Ansprüche, **dadurch gekennzeichnet, dass** eine Schutzwand (7) vorgesehen ist, die zwischen der Betäubungsstation (3) und dem Bediener angebracht ist, wobei der Betäubungsstromkreis nur geschlossen werden kann, wenn sich die Schutzwand (7) in der vorgesehenen Position befindet.

8. Schlachtvorrichtung nach einem der vorhergehenden Ansprüche, **dadurch gekennzeichnet, dass** radial zur Drehachse (12) mindestens eine Trennwand (13) angebracht ist, welche die Bereiche der einzelnen Aufhängeelemente (2) voneinander räumlich abtrennt.

9. Schlachtvorrichtung nach einem der vorhergehenden Ansprüche, **dadurch gekennzeichnet, dass** der Winkel (α) zwischen zwei Trennwänden (13) sowie die Form des von oben betrachteten Raumes zwischen zwei Trennwänden (13) im Wesentlichen dem Winkel (β) des sektorförmigen Beckens (4) und der Form des von oben betrachteten Beckens (4) entspricht, wodurch ein vertikales Anheben des Beckens (4) nach einem Schlüssel-Schloss-Prinzip nur möglich ist, wenn sich der drehbare Teil des Gestells (1) und damit ein Aufhängeelement (2) in der korrekten Lage zum Becken (4) befinden.

10. Schlachtvorrichtung nach einem der vorhergehenden Ansprüche, **dadurch gekennzeichnet, dass** ein Sicherheitsschalter vorgesehen ist, der das Schließen des Betäubungsstromkreises freigibt, wenn sich das Becken (4) in einer gegenüber der Ruhestellung vertikal angehobenen Position befindet und/oder eine Totmannschaltung zum Schließen des Betäubungsstromkreises vorgesehen ist.

11. Schlachtvorrichtung nach einem der vorhergehenden Ansprüche, **dadurch gekennzeichnet, dass** ein Auffangbecken (11) vorgesehenen ist, welches sich außerhalb der Betäubungsstation (3) und unterhalb der Trennwände (13) befindet.

12. Schlachtvorrichtung nach einem der vorhergehenden Ansprüche, **dadurch gekennzeichnet, dass** die Schlachtvorrichtung eine Transportpalette (20) aufweist, welche den Träger (14) mit dem Gestell (1) aufnimmt und in einer Transportstellung der Schlachtvorrichtung kein Element der Schlachtvorrichtung die Grundfläche der Transportpalette (20) überragt und/oder die Baugruppen und Einzelteile der Schlachtvorrichtung zerlegbar und zusammenbaubar sind, wodurch ein Transport durch Gebäudeöffnungen, wie beispielsweise Türen, ermöglicht wird.

13. Schlachtvorrichtung nach einem der vorhergehenden Ansprüche, **dadurch gekennzeichnet, dass** eine Verlängerung (30) vorgesehen ist, die an einem Aufhängeelement (2) des Gestells (1) lösbar befestigt ist, wobei die Verlängerung (30) mehrere Halter (22) aufweist und die vertikale Distanz zwischen diesen Haltern (22) der Verlängerung (30) und dem Becken (4) geringer ist, als die vertikale Distanz zwischen den Haltern (22), die am Aufhängeelement (2) angebracht sind, und dem Becken (4) und/oder eine im Wesentlichen in vertikaler Richtung verlaufende Haltestange (33) vorgesehen ist, wobei die Haltestange (33) am Gestell (1) oder einem Aufhängeelement (2) derart befestigt ist, dass ihre vertikale Position zum Gestell (1) einstellbar ist, und die Haltestange (33) eine Manschette (35) aufweist, die vorgesehen ist um die Position des Halses des zu schlachtenden Tieres gegenüber der Haltestange (33) zu fixieren.

14. Schlachtvorrichtung nach einem der vorhergehenden Ansprüche, **dadurch gekennzeichnet, dass** ein Wiegeelement (36) vorgesehen ist, welches zwischen dem Träger (14) und dem Gestell (1) angeordnet ist.

15. Verfahren für das Betäuben von Kleintieren, unter Verwendung einer Schlachtvorrichtung nach einem der vorhergehenden Ansprüche, umfassend die Schritte:
- Einhängen des zu betäubenden Tiers am Gestell (1) der Schlachtvorrichtung,
- manuelles Weiterdrehen des Gestells (1) der Schlachtvorrichtung bis sich das zu betäubende Tier in der Betäubungsstation befindet,
- manuelles Anheben eines Beckens (4),
- manuelles oder automatisches Auslösen des Betäubungsvorganges, und Verweilen des Gestells (1) und des zu betäubenden Tieres in konstanter Position während des gesamten Betäubungsvorganges.

## Claims

1. Slaughtering device for small animals with several different stations, wherein the slaughtering device has a stationary support (14) and a rotatingly mounted, carrousel-like frame (1) as well as several suspension elements (2) for suspending the animal to be slaughtered at the frame (1), wherein a direct suspension of the animals at the frame (1) is provided at a hanging station, and the animals are conveyed from station to station by means of a rotating movement of the frame relatively to the stationary part of the slaughtering device, and a stunning station (3) is provided with a basin (4) that can be adjusted in vertical direction and forms, along with a suspension element (2) and a power source (5), a power circuit for stunning the animal to be slaughtered, wherein the electricity in this stunning circuit flows when a suitable vertical position of the basin (4) has been reached where the head of the animal to be slaughtered is immersed in the water in the basin (4), **characterized in that** a guide is provided for the vertical movement of the basin (4), the movement of the basin not being coupled with other movements, and before the stunning process the basin (4) is movable in vertical direction as long as the head of the suspended animal is immersed in the liquid.

2. Slaughtering device according to claim 1, **characterized in that** a manual trigger device for closing the stunning circuit is provided.

3. Slaughtering device according to one of the preceding claims, **characterized in that** an automatic trigger device is provided moving the basin (4) in a suitable vertical position and then closing the stunning circuit.

4. Slaughtering device according to one of the preceding claims, **characterized in that** during stunning the animal to be slaughtered the frame (1) rests in a constant position relatively to the support (14).

5. Slaughtering device according to one of the preceding claims, **characterized in that** after closing the stunning circuit the power source (5) automatically carries out the stunning process, wherein the power source (5) makes use of preset values for the current and stunning time, and/or the slaughtering device has at least one display (6) displaying the state of the stunning process.

6. Slaughtering device according to one of the preceding claims, **characterized in that** the power source (5) has a data memory where the parameters of the stunning processes are filed, at least consisting of current, time of stunning, time and date, and a data interface, for example a USB interface, a mobile memory card, a flash memory, a network connection, or the like is provided for reading out these data from the data memory of the power source (5).

7. Slaughtering device according to one of the preceding claims, **characterized in that** a protective wall (7) is arranged between the stunning station (3) and the service person, wherein the stunning power circuit can only be closed when the protective wall (7) is in the intended position.

8. Slaughtering device according to one of the preceding claims, **characterized in that** radially to the rotational axle (12) at least one separating wall (13) is arranged spatially separating the areas of the single suspension elements (2) from one another.

9. Slaughtering device according to one of the preceding claims, **characterized in that** the angle (α) between two separating walls (13) as well as the shape of the space between the two separating walls (13) seen from above essentially corresponds with the angle (β) of the sector-like basin (4) and the shape of the basin (4) seen from above, so that a vertical lifting of the basin (4) is possible according to a lock-and-key principle only when the pivotable part of the frame (1), and thus a suspension element (2) is in the correct position relatively to the basin (4).

10. Slaughtering device according to one of the preceding claims, **characterized in that** a safety switch is provided releasing closing of the stunning circuit when the basin (4) is in a vertically lifted position relatively to the resting position, and/or a dead man's handle is provided for closing the stunning circuit.

11. Slaughtering device according to one of the preceding claims, **characterized in that** a catch basin (11) outside the stunning station (3) and below the separating walls (13) is provided.

12. Slaughtering device according to one of the preceding claims, **characterized in that** the slaughtering device has a transport pallet (20) receiving the support (14) along with the frame (1), and in a transport position of the slaughtering device no element of the slaughtering device protrudes beyond the base area of the transport pallet (20), and/or the components and single parts of the slaughtering device can be dismantled and assembled so that a transport through openings of buildings, such as for example doors, is possible.

13. Slaughtering device according to one of the preceding claims, **characterized in that** an extension (30) is provided fastened releasably to a suspension element (2) of the frame, wherein the extension (30) has several holding devices (22), and the vertical distance between these holding devices (22) of the extension (30) and the basin (4) is less than the vertical distance between the holding devices (22), attached to the suspension element (2), and the basin (4), and/or an essentially vertically extending holding rod (33) is provided, wherein the holding rod (33) is attached to the frame (1) or a suspension element (2) such that its vertical position to the frame (1) is adjustable, and the holding rod (33) has a collar (35) provided for fixing the position of the neck of the animal to be slaughtered relatively to the holding rod (33).

14. Slaughtering device according to one of the preceding claims, **characterized in that** a weighing element (36) is provided that is arranged between the support (14) and the frame (1).

15. Method for stunning small animals utilizing a slaughtering device according to one of the preceding claims, comprising the following steps:
- hanging the animal to be stunned up to the frame (1) of the slaughtering device,
- manual rotating the frame (1) of the slaughtering device until the animal is in the stunning station,
- manual lifting of the basin (4),
- manual or automatic triggering the stunning process and resting of the frame (1) and the animal to be stunned in constant position during the entire stunning process.

## Revendications

1. Dispositif d'abattage de petits animaux comportant des stations différentes de façon à ce que le dispositif d'abattage possède un support immobile (14), une armature (1) sous forme d'un carrousel tournantet plusieurs éléments d'accrochage (2) destinés à suspendreles animaux prévus à l'abattage à l'armature (1), de façon à ce qu'un accrochage direct des animaux à l'armature (1) est prévu dans une station d'accrochageet à ce que les animaux sont déplacés de station en station par un mouvement rotatif de l'armature par rapport à la partie immobile du dispositif d'abattage et en ce qu'une station d'anesthésie (3) est prévue comportant une bassine (4) pouvant être réglée verticalement en formantavec un élément d'accrochage (2) et une source de courant (5) une boucle de courant pour l'anesthésie de l'animal prévu à l'abattagedans une configurationdans laquelle le courant circule dans cette boucle de courant anesthésiant lorsque la position de la bassine (4) atteint la position verticale à laquelle la tête de l'animal prévu à l'abattage plonge dans l'eau de la bassine (4), **caractérisé en ce qu'**un guidage pour le mouvement vertical de la bassine (4) et indépendant des autres mouvements est prévu et **en ce que** la bassine (4) est verticalement mobile avant le procédé d'anesthésie jusqu'à ce que la tête d'un animal suspendu plonge dans le liquide.

2. Dispositif d'abattage selon la revendication 1, **caractérisé en ce qu'**un dispositif de déclenchement manuel est prévu pour la fermeture de la boucle de courant anesthésiant.

3. Dispositif d'abattage selon une des revendications précédentes, **caractérisé en ce qu'**un déclenchement automatique est prévu positionnant la bassine (4) en une position verticale appropriée puis fermant ensuite la boucle de courant anesthésiant.

4. Dispositif d'abattage selon une des revendications précédentes, **caractérisé en ce que** l'armature (1) est en position immobile constante par rapport au support (14) lors de l'anesthésie de l'animal destiné à l'abattage.

5. Dispositif d'abattage selon une des revendications précédentes, **caractérisé en ce que** la source de courant (5) effectue le procédé d'anesthésie automatiquement après la fermeture de la boucle de courant d'anesthésie en utilisant des valeurs de courant et de durée fixées préalablement et/ou **en ce que** le dispositif d'abattage possède au moins un affichage (6) montrant l'état d'avancement du procédé d'anesthésie.

6. Dispositif d'abattage selon une des revendications précédentes, **caractérisé en ce que** la source de courant (5) possède un moyen de stockagede données dans lequelles paramètres du procédé d'anesthésie concernant au moins la force du courant, la durée d'anesthésie, l'heure et la date sont stockées **en ce qu'**une interface de données, par exemple une interface USB, une carte de stockage mobile, une mémoire flash, un port réseau ou une interface similaire est prévue afin de lire ces données du moyen de stockage de données de la source de courant (5).

7. Dispositif d'abattage selon une des revendications précédentes, **caractérisé en ce qu'**une paroi de protection (7) est prévue et située entre la station d'anesthésie (3) et l'operateur de façon à ce que la boucle de courant anesthésiant ne peut être fermée seulement lorsque la paroi de protection (7) est placée dans sa position prévue.

8. Dispositif d'abattage selon une des revendications précédentes, **caractérisé en ce qu'**au moins une paroi de séparation (13) est située radialement par rapport à l'axe de rotation (12) séparant dans l'espace les éléments d'accrochage (2) entre eux.

9. Dispositif d'abattage selon une des revendications précédentes, **caractérisé en ce que** l'angle (α) entre deux parois de séparation (13) et la forme vue d'en haut de l'espace entre deux parois de séparation (13) correspond essentiellement à l'angle (β) de la bassine (4) en forme de secteur et de la forme vue d'en haut de la bassine (4) permettant ainsi de soulever la bassine (4) selon le principe clé-serrure seulement lorsque la partie pivotante de l'armature (1) et donc l'élément d'accrochage (2) est dans une position conforme par rapport à la bassine (4).

10. Dispositif d'abattage selon une des revendications précédentes, **caractérisé en ce qu'**un interrupteur de sécurité est prévu, permettant la fermeture de la boucle de courant d'anesthésie lorsque la bassine (4) est en position verticalement soulevée par rapport à la position de repos et/ou **en ce qu'**un dispositif d'homme mort est prévue pour la fermeture de la boucle de courant anesthésiant.

11. Dispositif d'abattage selon une des revendications précédentes, **caractérisé en ce qu'**un bac de récupération (11) est prévu et situé en dehors de la station d'anesthésie (3) et en-dessous des parois de séparation (13).

12. Dispositif d'abattage selon une des revendications précédentes, **caractérisé en ce que** le dispositif d'abattage possède une palette de transport (20) recevant le support (14) et l'armature (1) et **en ce qu'**en position de transport du dispositif d'abattage aucun élément du dispositif d'abattage dépasse la surface de base de la palette de transport (20) et/ou en ce que les éléments de construction et les parties individuelles du dispositif d'abattage peuvent être dissociées et assemblées afin de permettre le transport à travers des ouvertures dans des immeubles, par exemple par des portes.

13. Dispositif d'abattage selon une des revendications précédentes, **caractérisé en ce qu'**une prolongation (30) est prévue et fixée de façon amovible au niveau d'un élément d'accrochage (2) de l'armature (1) de façon à ce que la prolongation (30) comporte plusieurs supports (22) avec une distance entre ces supports (22) de la prolongation (30) et la bassine (4) inférieure à la distance verticale entre les supports (22) situé au niveau de l'élément d'accrochage (2) et la bassine (4) et/ou **en ce qu'**une tige de support (33) orientée essentiellement verticalement et fixée à l'armature (1) ou à un élément d'accrochage (2) de façon à ce que sa position verticale par rapport à l'armature (1) est ajustable et **en ce que** la tige de support (33) comporte un manchon (35) destiné à fixer la position du cou de l'animal prévu à l'abattage par rapport à la tige de support (33).

14. Dispositif d'abattage selon une des revendications précédentes, **caractérisé en ce qu'**un élément de pesage (36) est prévu entre le support (14) et l'armature (1).

15. Procédé destiné à l'anesthésie de petits animaux par l'utilisation d'un dispositif d'abattage selon une des revendications précédentes, comprenant les étapes :
- accrochage de l'animal à anesthésier à l'armature (1) du dispositif d'abattage,
- pivotement manuel de l'armature (1) du dispositif d'abattage jusqu'à ce que l'animal à anesthésier est situé dans la station d'anesthésie,
- soulèvement manuel d'une bassine (4)
- déclenchement manuel ou automatique du procédé d'anesthésie et attardement de l'armature (1) et de l'animal à anesthésier en une position constante pendant tout le procédé d'anesthésie.
